# EUROPÄISCHE PATENTANMELDUNG

(11) **EP 1 978 715 A1**
(43) Veröffentlichungstag der Anmeldung: **08.10.2008**
(21) Anmeldenummer: 08101941.6
(22) Anmeldetag: 25.02.2008
(51) Int. Cl.: H04L 29/08, H04L 12/28

(54) **Kommunikationsverfahren zur Datenübertragung für ein elektronisches Kleinstgerät**

(30) Priorität: 03.04.2007 US 909764 P
(71) Anmelder: Kopf, Daniel, 6832 Röthis (AT)
(72) Erfinder: Kopf, Daniel, 6832 Röthis (AT)
(74) Vertreter: Harmann, Bernd-Günther

(57) **Zusammenfassung**

In einem Kommunikationsverfahren zur Datenübertragung für ein elektronisches Kleinstgerät (1), mit einer auf einem Anzeigegerät (2) realisierten Benutzerschnittstelle zur Darstellung von Daten des Kleinstgerätes (1) mittels eines skriptbasierten Browsers, der innerhalb eines Skripts Dateien als Informationseinheiten aufruft, und eines Datenübertragungsprotokolls wird eine Zwischenanwendung (4) verwendet. Diese Zwischenanwendung (4) verfügt über eine erste Kommunikationsverbindung (EK) mit dem Anzeigegerät (2) einerseits und eine zweite Kommunikationsverbindung (ZK) mit dem Kleinstgerät (1) andererseits wobei die Datenübertragungsrate der zweiten Kommunikationsverbindung (ZK) geringer als die der ersten Kommunikationsverbindung (EK) ist, und Rechenleistung und Speicherplatz des Kleinstgerätes (1) geringer als Rechenleistung und Speicherplatz der Zwischenanwendung (4) sind. Das Verfahren überträgt dem Kleinstgerät (1) zugeordnete Daten an das Anzeigegerät (2) mittels Zwischenanwendung (4), wobei die Daten vom Kleinstgerät (1) synchron oder vorab asynchron zum Übertragen an die Zwischenanwendung (4) übermittelt werden. Dabei erfolgt ein Anpassen der zu übertragenden Daten so, dass die Zwischenanwendung (4) eine für das Kleinstgerät (1) und das Anzeigegerät (2) spezifische Datei bereitstellt, wobei diese spezifische Datei durch das Anzeigegerät (2) anhand der Dateibezeichnung dem Kleinstgerät (1) zuordenbar ist, so dass eine Verarbeitung mittels skriptbasiertem Browser ermöglicht wird und die Zwischenanwendung (4) für das Anzeigegerät (2) die funktionale Schnittstelle zum Kleinstgerät (1) definiert.

## Beschreibung

Die Erfindung betrifft ein Kommunikationsverfahren zur Datenübertragung für ein elektronisches Kleinstgerät nach dem Oberbegriff des Anspruchs 1, ein Computerprogrammprodukt und ein Datenstrukturprodukt.

Gegenwärtig besteht ein zunehmender Bedarf nach Einbindung und Integration möglichst vieler elektronischer Geräte in ein gemeinsames Kommunikationsnetzwerk, welches sowohl den Zugriff auf die Daten angeschlossener Geräte ermöglicht, als auch deren Fernsteuerung. Dabei ist es vorteilhaft, wenn vertraute und eingeführte Technologien bzw. Oberflächen und Schnittstellen weiterhin Verwendung finden können. Während Geräte mit ausgeprägter Rechenleistung und entsprechendem Speicherplatz vergleichsweise einfach unter Verwendung verbreiteter Protokolle, wie z.B. TCP/IP oder HTTP, eingebunden werden können, stellen die mit solchen Protokollen verbundenen Systemanforderungen für elektronische Kleinstgeräte aufgrund deren geringer Rechenleistungen, knappen Speicherplatzes und langsamer Datenübertragungsraten Probleme dar.

Eine Einbindung solcher Geräte in lokale oder globale Netzwerke, wie z.B. dem Internet, würde einem Nutzer jedoch den prinzipiell weltweit möglichen Zugriff auf solche Geräte ermöglichen, z.B. die Steuerung von Geräten der Haustechnik vom Urlaubsort aus. Somit besteht ein Bedürfnis, auch mikrocontrollerbasierte Kleinstgeräte trotz ihrer Speicherlimitierung und einer geringen Datenübertragungsgeschwindigkeit in bestehende Kommunikationssysteme einbinden und wie eine Art Webserver betrieben zu können. Diese Kleinstgeräte sollen dabei mit Anzeigegeräten, wie z.B. einem PC, Mobilgeräten, Webpanel-PC, Medien-TV, etc. verbindbar sein, so dass ein darauf vorhandener, generischer Browser die Darstellung der Benutzerschnittstelle des Gerätes, z.B. einer graphischen Benutzeroberfläche (GUI), und somit die Bedienung des Kleinstgerätes ermöglicht. Um eine universelle Einbindbarkeit zu gewährleisten, sollte auf dem Anzeigegerät keine gerätespezifische Software zu installieren sein, wobei die kompatiblen Kleinstgeräte automatisch erkannt werden.

Eine Vernetzungstechnologie für elektronische Kleinstgeräte sollte somit möglichst folgende Eigenschaften aufweisen:
- Bedienung von Geräten mittels graphischer Benutzeroberflächen (Graphic User Interface - GUI) von möglichst beliebigen Anzeigegeräten wie PC, Mobilgeräten, Webpanels, TV.
- Eignung für Kleinstgeräte, deren Speichervolumen und Datenübertragungsgeschwindigkeit für die bekannten Protokolle HTTP und/oder TCP/IP nicht ausreicht.
- Fernbedienbarkeit via Internet, ebenfalls von diversen Anzeigegeräten aus, dies bei hoher Datensicherheit.
- Installation von gerätespezifischer Software auf einem Anzeigegerät oder Router sollte nicht erforderlich sein.
- Bedienung der Kleinstgeräte auch ohne aktive Internetverbindung.
- Eignung für jede beliebige Art von Kleinstgeräten, keine Einschränkung auf eine konkrete Gruppe von Geräten.
- Grosses Anwendbarkeitsspektrum in der Bedienung.
- Erkennen von Geräten und übersichtliche Darstellung der verbundenen Geräte.
- Einbinden von Gerätefunktionen in Online-Webapplikationen möglich.

Einige Beispiel für gattungsgemässe Kleinstgeräte und deren Anwendung werden nachfolgend rein exemplarisch angeführt
- Eine Armbanduhr (z.B. Sportarmbanduhr mit Herzpulsmessgerät) wird mit einem Anzeigegerät (PC oder Mobiltelefon, etc.) verbunden, stellt auf dem PC ihre Inhalte in einem Browser dar und kann von diesem Browser aus bedient und eingestellt werden, ohne eine Anwendung zu installieren, die speziell für die Armbanduhr entwickelt werden musste. Hierbei kann die Verbindung z.B. via RFID-Technik, NFC oder über ein Kabel zustande kommen.
- Ein Schrittsensor (Sportaccessoir zum Einbringen in den Schuh, siehe z.B. nike.com) erhält/überträgt Daten von/an ein Mobiltelefon (oder PC) via drahtlose Verbindungstechnik.
- Ein Messgerät offeriert über diese hier dargestellte Technik seine Messergebnisse im Browser eines verbundenen Anzeigegerätes und ermöglicht somit die Darstellung von Messergebnissen ohne eine gerätespezifische Software auf dem Anzeigegerät zu installieren. Das Messgerät nimmt Bedienkommandos des Benutzers über diese Browseroberfläche entgegen.
- Eine Set-Top-Box oder ein Media-Center-PC (mit Anzeigegerät TV) stellt Geräte-GUIs (z.B. Einstellungsseiten, Auswahlseiten für Programme, Inhalte, Einstellungen, etc) auf einem Mobilgeräten mit Browser (oder PC oder auf einer anderen Browserfähigen Bedienkonsole) dar.
- Die Set-Top-Box (STB) oder der Media-Center-PC stellen ihrerseits zusammen mit dem TV das Anzeigegerät dar, die unten angegebene Zwischenanwendung (4) läuft auf der STB und ermöglicht die Bedienung von Kleinstgeräten, die mit der STB in Verbindung stehen, im Browser, der ebenfalls auf der STB läuft und am TV-Bildschirm angezeigt wird.
- Eine Stereoanlage wird auf einem Mobiltelefon oder auf einer eigens konzipierten Bedienkonsole (oder Mobiltelefon, PC, etc.) angezeigt bzw. es erscheinen ihre Einstellungsseiten auf solchen Anzeigegeräten.
- Ein kontaktloser Türöffner - basierend auf RFID, ZigBee oder Bluetooth als Funkübertragungstechnik - zeigt eigene Inhalte in einem Browser eines Mobiltelefons (oder PCs, etc.) an, wie z.B. Zugangsrechte, geloggte Zugangsdaten, etc, und lässt sich über diese Oberfläche auch bedienen.
- Ein Servicetechniker bedient in seiner Funktion ein Gerät, z.B. einen Getränkeautomaten, und liest Werte (d.h. Variablen) aus und setzt Einstellungen (d.h. Variablenzuweisungen).
- Ein Gerätebesitzer spielt einen Firmware/Software-Upgrade ohne Spezialsoftware auf sein Gerät auf.

Im Stand der Technik sind Verfahren bekannt, die es durchaus erlauben, Kleinstgeräte vom PC aus zu bedienen. Dies gilt sogar für besonders kleine Geräte wie Sportuhren, Blutdruckmessgeräte, Multimeter, etc. Ihnen ist jedoch gemeinsam, dass für jedes dieser Geräte und auf jedem Anzeigegerät die gerätespezifische Software zu installieren ist. Wird ein neueres Gerätemodell gekauft, ist zumeist eine erneute Softwareinstallation nötig. In ähnlicher Weise muss beim Erwerb eines neuen Anzeigegerätes (PC) die erneute Installation der Software für jedes einzelne Gerät durchgeführt werden. Diese Installation der Software erfolgt üblicherweise von einer mitgelieferten CD oder von einer Online-Seite mit Download und erfordert mehrere Schritte. Neben der eigentlichen Anwendungssoftware müssen in vielen Fällen auch noch gerätespezifische Treiber (also versteckte Software) installiert werden. Dieses Erfordernis stellt eine abschreckende Hürde für einen Großteil von PC-Benutzern dar und ist selbst für versierte Bediener mit Aufwand verbunden.

Diese Anforderungen einer Integration ohne Installation gerätespezifischer Anteile erscheinen insbesondere bei Geräten mit kleinen Mikrocontrollern (<100 kB Speicher, 8-Bit-Rechenleistung oder kleiner) aus folgenden Gründen als nicht erfüllbar, insbesondere gilt:
- Für die Realisierung von TCP/IP und HTTP wird gemeinhin ein Speichererfordernis von einigen 10 kB genannt und eine Rechenleistung, die empfohlenerweise 8 -Bit übersteigt. Dies gilt insbesondere dann, wenn der 8-Bit-Prozessor ohnehin mit den eigentlichen Gerätefunktionen beschäftigt ist.
- Hohe Verwendbarkeiten von Anwendungen, die in einem Browser ablaufen bzw. auf (z.B. AJAX-) Skripten beruhen, haben bei Einrechnung der verbreiteten AJAX/Javascript-Libraries einen Speichererfordernis von deutlich über 100 kB, was nicht auf kleinen Mikrocontroller realisierbar ist und darüber hinaus über eine langsame Datenleitung inakzeptabel lange für die Übertragung benötigt.
- Eine Webserverfunktionalität erfordert in der Regel eine Dateiserver-Implementierung o.ä. auf dem Kleinstgerät, was wiederum Ressourcen erfordert.

Die Aufgabe der vorliegenden Erfindung besteht in der Bereitstellung eines Verfahrens zur verbesserten bzw. vereinfachten Kommunikation mit elektronischen Kleinstgeräten.

Eine weitere Aufgabe besteht in der Ermöglichung der Einbindung von solchen Kleinstgeräten in Kommunikationssysteme, ohne dass benutzerseitig eine gerätespezifische Adaption vorgenommen werden muss.

Eine weitere Aufgabe besteht in der Ermöglichung der Fernbedienbarkeit von Kleinstgeräten über Kommunikationsnetzwerke, wie z.B. dem Internet oder LAN bzw. WLAN.

Diese Aufgaben werden erfindungsgemäss durch den Gegenstand von Anspruch 1 sowie durch die kennzeichnenden Merkmale der Unteransprüche gelöst bzw. die Lösungen fortgebildet.

Die Erfindung betrifft ein Kommunikationsverfahren zur Datenverbindung mit einem elektronischen Kleinstgerät. Erfindungsgemäss wird hierbei eine Recheneinheit als Middleware zwischen das Kleinstgerät und den Rechner geschaltet, auf dem die Benutzerschnittstelle realisiert wird. Diese Middleware fungiert als Zwischenlage und handhabt die an das Kleinstgerät gerichteten Anfragen und adaptiert ggf. die entsprechend zu übertragenden Daten, indem diese verändert oder ergänzt werden. Dabei fungiert diese Middleware als Schnittstelle zwischen Browser und Kleinstgerät, so dass aus Sicht des Browsers eine virtuelle funktionale Einheit mit im Vergleich zum Kleinstgerät höherer Leistung resultiert.

Der skriptbasierte Browser verwendet einen Dateninput aus sog. "Skripten" und Dateien, wobei die Nutzdaten enthaltenden Dateien über die Abarbeitung des Skripts aufgerufen werden. Diese beiden Elemente verkörpern somit Inhalt ("Content"), Struktur und Style der Benutzerschnittstelle. Die Skripte sind dabei - mindestens zum Teil - textbasiert und in einem einfachen Texteditor vom Menschen lesbar. Der erfindungsgemäße Ansatz beruht nun darauf, die für das Kleinstgerät spezifischen Einstellungen und Daten via die Middleware bzw. Zwischenanwendung vom Kleinstgerät bereitzustellen und den Aufruf über einen dem Kleinstgerät zugeordnete Dateibezeichnung, wie z.B. dem Dateinamen oder einen kommentierenden Eintrag, zu bewirken. Die Kommunikation beginnt üblicherweise mit der Abfrage eines sog. Default Files wie z.B. index.html. Der Browser greift somit auf eine (solche) Datei zu, die über die Middleware transportiert oder von ihr bereitgestellt wird, wobei diese alle weiteren Funktionen zur Gewährleistung einer Interoperabilität übernimmt. Dies betrifft insbesondere die Komprimierung oder Dekomprimierung von Daten, Ergänzen der an den Browser zu übertragenden Daten sowie die Abwicklung der Kommunikation mit dem Kleinstgerät.

Die für das Kleinstgerät spezifischen Funktionen und Dateien bzw. Libraries werden somit im Hintergrund durch die Middleware bereitgestellt, wobei diese sowohl auf feste, vorinstallierte statische Datenbestände oder aber über Kommunikationssysteme auch dynamisch auf extern bereitgestellte Bestände zugreifen kann. Zwischen diesen Alternativen können naturgemäss verschiedene weitere Varianten, z.B. mit periodischem lokalen Abspeichern eines aktualisierten und über das Internet oder ein LAN bereitgestellten Datenbestandes.

Netzwerke werden üblicherweise nach dem OSI-Modell charakterisiert, in dem die einzelnen Funktionen einer Datenkommunikationsverbindung in 7 verschiedene Kategorien oder Schichten eingeteilt werden. Dabei ist das bekannte Hypertext Transfer Protokoll (HTTP) auf die obersten drei anwendungsorientierten Schichten bezogen. TCP und IP liegen darunter. Oberhalb der obersten Protokollschicht 7 als Anwendungsschicht liegt die eigentliche Benutzeranwendung oder Softwareanwendung. Im Folgenden sei der konkrete und verbreitete Fall betrachtet, in dem HTTP als Protokoll für die Übertragung von (HTML-)Dateien benutzt wird, und in einem Browser diese (HTML-)Dateien dargestellt werden: In der html-Datei können wiederum weitere Dateien angefordert werden, die zwecks Darstellung (z.B. Bilddatei) oder Skriptbearbeitung (z.B. Javascript-Datei oder Flash-Datei) benötigt werden. Dabei kann üblicherweise in einer HTML-Datei nur die oberste Schicht des HTTP-Protokolls angesprochen werden (Anforderung einer Datei gemäss Dateiname), nicht jedoch auf die darunterliegenden. Der Zugriff auf darunterliegende Schichten ist in HTML nicht und in Javascript mit zusätzlichem Aufwand (d.h. zusätzlichen Codezeilen) verbunden und birgt Fehlerquellen. Das Kleinstgerät befasst sich im erfindungsgemässen Ansatz bevorzugt nur mit der Anforderung einer Datei gemäss Dateiname, um Ressourcen zu sparen, sodass die eindeutige Kennung eines Files zwecks Vorratsspeicherung bevorzugt im Dateinamen enthalten ist. Diese Erkenntnis ist relevant für das unten dargestellte erfindungsgemäße Konzept der Vorratsspeicherung.

Die Erfindung ermöglicht es insbesondere, besonders kleine und in der Übertragungsgeschwindigkeit und Speicherkapazität im Vergleich zu PCs und Mobiltelefonen deutlich zurückstehende Kleinstgeräte mit Anzeigegeräten zu verbinden, insbesondere mit PCs, Mobiltelefonen (insbesondere sog. "smart phones"), Mobilgeräten mit AJAX- und/oder Flash-fähigem Browser und Fernsehgeräten (letztere evtl. mit einer sog. Set-Top-Box ausgestattet oder mit dieser verbunden, die eine Verbindung mit dem Internet und ggf. auch mit den Kleinstgeräten herstellen kann. Desweiteren ermöglicht diese Erfindung insbesondere jenen Kleinstgeräten, die nicht standardmäßig ohnehin mit dem Internet in Verbindung stehen, auf komfortable Art und Weise über Anzeigegeräte mit dem Benutzer zu kommunizieren. Schließlich ist es wesentlicher Bestandteil der Erfindung, diesen Geräten jeweils ein User Interface auf dem Wege eines standardmäßig vorhandenen Browsers zu ermöglichen, der AJAX-fähig ist, also neben HTML auch Javascript und "Asynchrones Javascript und XML" (=AJAX) versteht. Der XMLHttpRequest ermöglicht das asynchrone, das heisst im Hintergrund stattfindende, Nachladen von Daten (z.B. den weiter unten dargestellen Dateien mit Daten im xml- oder json-Format) mit nachfolgender Aktualisierung im Browser an der vorgesehenen Stelle, ohne einen Reload der ganzen Seite zu benötigen (wie in HTML).

Besondere Stärken entfaltet die hier vorgestellte Technologie im Zusammenhang mit Kleinstgeräten, die besonders kleine Chips verwenden, z.B. 8-bit Chips mit 100 kB Speichervermögen oder weniger. Die sogenannte Webservertechnik ist bei solchen Microcontrollern durchaus bekannt, liefert jedoch meist nur statische Präsentationen mit vergleichsweise geringem Bedienkomfort, da sie nur auf HTML basieren. Die dynamische, im Hintergrund ablaufende Überprüfung von Daten auf dem Kleinstgerät, und allfällige Darstellung im Browser sind im Stand der Technik nicht realisiert. Erfindungsgemäss kann anstelle der Hypertext-Markup-Language (HTML) durchaus die im Webdesign-Bereich inzwischen dominante AJAX-Skriptsprache auch auf solch kleinen Microcontrollern implementiert werden, wobei zudem zu erwartenden Limitierungen aufgrund der beschränkten Speichergrösse und der langsamen Übertragungsgeschwindigkeit, nicht zuletzt jedoch auch die der limitierten Rechenleistung erfolgreich überwunden werden.

Hierdurch wird es möglich, kleine Mikroprozessoren mit einem Browser, gegebenenfalls auch mit dem Internet zu verbinden, ohne ein vollständiges TCP/IP-Protokoll auf diesem kleinen Prozessor realisieren zu müssen. Letzteres würde durchaus Vorteile aufweisen, wenn dieser über eine höhere Rechenleistung verfügen würde. So ist es durchaus üblich, für TCP/IP-Anwendungen einen 32-bit-Prozessor zu verwenden. Die Verwendung von grösseren Prozessoren schliesst jedoch die Nutzung für Anwendungen aus, in denen Geräte-Grösse, Preis, Stromverbrauch eine grosse Rolle spielen und kleinstmögliche Microcontroller benötigt werden.

Erfindungsgemäss wird zudem eine konkrete Syntax für Server-Side-Includes, d.h. die dynamisch Einbindung von Variablenwerten in Skriptseiten, vorgeschlagen, und gleichzeitig eine Syntax für Variablenzuweisungen konkret angegeben, welche die frühzeitige Entwicklung von (AJAX-oder HTML-)-Skripten und ihren laufenden Test auf einem speziell angepassten Simulationswebserver ermöglicht. Ausserdem wird eine sehr einfache und übersichtliche Schnittstelle zwischen dem Device-Entwickler und dem AJAX-Skriptdesigner (Webdesigner) ermöglicht. Dies macht Projektabläufe einfacher und übersichtlicher, reduziert Projektzeiten, und macht einen Projekterfolg wahrscheinlicher.

Erfindungsgemäss werden die folgende Datenstrukturen und Datenübertragungsprinzipien entweder einzeln oder kumulativ im Zusammenhang mit der Gerätekommunikation genutzt:
- Datenvorratsspeicherungsmechanismus bzw. Caching-Mechanismus, der oberhalb der 7. OSI-Schicht auf Request-Ebene gesteuert wird, und zwar durch Einfügen eines Hash-Wertes in die URL bzw. in den Dateinamen. Dies betrifft jegliche statische Files, nicht jedoch Files mit dynamisch veränderbarem Inhalt. Aufgrund der Einfachheit und Klarheit ist dieser Mechanismus für Kleinstgeräte geeignet. Darüber hinaus ist dieser Mechanismus auf leistungsschwachen (z.B. Router-)Plattformen aufgrund seiner Einfachheit implementierbar und effizient lauffähig.
- Anpassung der Datenstruktur auf Kleinstgeräte: Für besonders leistungsschwache Kleinstgeräte wird eine Webserver-Datenstruktur eingerichtet, welche nur aus zwei Dateien besteht: einmal aus einer Default Datei (z.B. /index.html oder /) und zum anderen aus einer gepackten Datei, welches alle restlichen (statischen) Skriptdateien enthält, welches bspw. "device.zip" genannt werden kann. Die Middleware übernimmt dann die Funktion des bspw. automatischen Anfragens der Datei "device.zip", entpackt den Inhalt, und beantwortet die darin enthaltenen Files im Falle einer Anfrage direkt, ohne diese Anfrage an das Gerät weiterzusenden. Diese Datenstruktur hat den wesentlichen Vorteil, dass ein Kleinstgerät aus Sicht des Browsers wie ein Webserver mit vielen Dateien aussieht, in der tatsächlichen Ausführung jedoch nur zwei Files kennen und speichern muss. Somit braucht dieses Kleinstgerät gar kein Datei-System, und kann trotzdem wie ein Webserver funktionieren, was somit Mikrocontroller mit noch weniger Ressourcen zu Miniwebservern werden lässt. Dies setzt voraus, dass dieses Gerät immer über eine Middleware verbunden wird, welche die Funktion des Anfragens, Entpackens und Zurverfügungstellens des Inhaltes dieses gepackten Datei "device.zip" übernimmt. Da die Middleware allerdings üblicherweise auf verhältnismäßig leistungsstärkeren Plattformen läuft, ist somit die Verteilung des Rechenaufwandes zugunsten des Kleinstgerätes in die Middleware erfolgt. Dynamische Inhalte können auch bevorzugt innerhalb von syntaktisch vorgegebenen Variablenskripten (oder ähnlich) dargeboten, wie z.B. in Form von .json-Dateien, welche eine im Vergleich zu xml-Dateien kompakte und dennoch übersichtliche und menschenlesbare Datenstruktur verkörpern. Diese sind nicht notwendigerweise Teil des Dateisystems, sondern werden durch vorgefertigte Funktionen der Firmware des Kleinstgerätes bearbeitet, wodurch das Dateisystem klein gehalten werden kann.
- Vereinfachung des Datenübertragungsprotokolls auf Seiten des Kleinstgerätes: die Middleware nimmt Anfragen auf, z.B. auf Basis des bekannten HTTP-Protokolls, vom Browser entgegen und beantwortet diese. Es kommen jedoch eine Vielzahl von weiteren, im Internetdatenverkehr verwendeten Protokollen in Frage: HTTPS für die sichere Datenkommunikation, UDP, SIP, etc, aber auch drahtlose Übertragungsprotokolle wie zB das Serial-Port-Profile von Bluetooth, ZigBee, IEEE 802.15.4, etc. Für Kleinstgeräte sind diese Protokolle jedoch zu ressourcenintensiv, so dass im Stand der Technik eine direkte Bearbeitung durch das Kleinstgerät nicht möglich ist. Erfindungsgemäss wird das Protokoll, z.B. http, stark vereinfacht und ein HTTP-ähnliches Protokoll entworfen, indem nur eine Teilmenge des Protokolls übernommen und für die Kommunikation der Middleware mit dem Kleinstgerät verwendet wird. In Kurzform für das Beispiel HTTP dargestellt: von HTTP werden übernommen:
   o Nur eine Request-Zeile, keine weiteren HTTP-Zeilen
   o Syntax des Requests (z.B. "GET ...", "PUT ...")
   o Syntax für die Übertragung von Variablenwerten analog zur Übertragung von Anfrageparametern (z.B. "GET ...?VAR1=1")
   o Syntax der Response ohne jegliche HTTP-Statuszeilen, maximal jedoch mit einer Zeile (insbesondere, wenn als Response nur ein HTTP-Statuscode gesendet wird ("OK" beim PUT command oder "Not Found", siehe weiter unten)
   o Syntax der Response von regelmässig angefragten (zB Sensor-)Datendateien mit einer HTTP-Zeile vor dem content, welche eine Zeitdauer der Gültigkeit dieser Datendatei angibt und der Zwischenanwendung ("Middleware") mitteilt, dass diese Datei zwischengespeichert werden kann. Im Gegensatz zum bekannten HTTP-Eintrag "Expires:..." wird hier keine absolute Zeit sondern eine (relative) Zeitdauer vom Kleinstgerät z.B. in Millisekunden angegeben, sodass diese Angabe im Kleinstgerät nicht errechnet werden muss (d.h. statisch ist), und es auch keine aktuelle Zeit kennen muss. Im Ergebnis kann die Zwischenanwendung diese konkrete Datei bei Anfragen vom Browser nach genau dieser Datei in genau diesem konkreten Device für die angegebene Zeitdauer zwischenspeichern, egal von welchem Browser die Anfrage kommt. Somit wird das Device bei paralleler Bedienung von mehreren Browsern aus nicht mit einer Vielzahl von Abfragen überlastet. Dieser HTTP-Eintrag vor dem Content einer Datendatei kann aus Sicht des Kleinstgerätes fixer Bestandteil der Datei am Dateianfang sein, die Erkennung durch die Middleware erfolgt mittel "HTTP..." am Anfang der Datei, womit die Middleware das Vorhandensein einer HTTP-headerzeile erkennt. Die http-Headerzeile wird mit <CR><LF><CR><LF> vom nachfolgenden Content wie bei http üblich abgetrennt.
      Beispiel:
      HTTP/1.0<CR><LF>
      Expires: 1000ms<CR><LF><CR><LF>
      {"SENSORWERT":"25°C"}
   o Die Angabe der Content-Length gemäß HTTP-Vorgabe entfällt, damit das Kleinstgerät die Länge des Inhaltes nicht, wie bei HTTP verlangt, im voraus zählen und angeben muss. Die Länge wird von der Middleware berechnet und die entsprechende HTTP-Zeile eingefügt. Somit wird dem Kleinstgerät wiederum eine rechenintensive Tätigkeit, insbesondere bei dynamischen Inhalten, abgenommen.
   o Abschließen des Requests mit einem End-Of-File, bevorzugt 0x00, also Null, da dies später bei der Implementierung in Javascript von Vorteil ist, weil dort die 0x00 bei String-Variablen, welche Content beinhalten, ebenfalls als Erkennung des String-Endes verwendet wird und somit die gleichen Escaping-Regeln insbesondere auch beim PUT von Onlinedaten verwendet werden können. Escaping-Regeln für den Dateninhalt, damit das End-Of-File nicht im Inhalt, sondern eindeutig nur am Ende der Response und somit nur einmal innerhalb und zwar am Ende eines Request/Response-Zyklus vorkommt. Diese EOFbezogene Datenkommunikation ist insbesondere für serielle Datenübertragung geeignet, und dies auch dann, wenn mehrere Kleinstgeräte mit geringer Rechenleistung an einem seriellen Bus hängen, da das Ende einer Request/Response-Transmission einfach am EOF erkannt werden kann.

Erfindungsgemässe Modifikationen dieser Lösung können vom Fachmann auch für andere Protokolle und Systemanforderungen implementiert werden, wobei das Grundprinzip der Entlastung des Kleinstgerätes in Bezug auf Protokollsyntax, Rechenleistung und Datenübertragungserfordernis beibehalten bleibt. Insbesondere kann das Protokoll als echte Teilmenge von HTTP definiert werden. Dies wird dadurch erreicht, dass das EOF nicht angefügt wird, jedoch vor dem HTTP-Inhalt jeweils die HTTP-Zeile "Content-Length:[Länge]" eingefügt wird.

Viele Verbindungen kommen durch einen USB-Adapter zustande. Die Middleware kann in einem solchen USB-Adapter mit Speicherfunktion enthalten sein, so dass sie automatisch und ohne vorherige Installation verfügbar ist ("Softwarekabel"). Dieser USB-Adapter hat dann Doppelfunktion: zum einen speichert er die Middleware (USB-Memory-Stick) und zum anderen enthält er einen Signaladapter, z.B. von USB auf ein serielles Datenkabel (RS232, RS485, RS422, o.ä.), von USB nach ZigBee (ZigBee Coordinatorfunktion), von USB nach UWB, etc.

Die Erfindung bietet besondere Vorteile in einer solchen, oben geschilderten technischen Konstellation, ist jedoch nicht darauf beschränkt. Sie kann somit auf die Verbindung/Connection aller möglichen Kleingeräte ohne Limitierungen angewendet werden.

Desweiteren kann die Erfindung, insbesondere der einfach handzuhabenden Caching-Mechanismus, auch im Internet, ohne Bezug zu Kleinstgeräten, und bei Webapplikationen angewendet werden und dort für das zuverlässige Caching von eindeutig im Dateinamen gekennzeichneten Dateien sorgen und somit für das Browserunabhängige und URL-unabhängige Caching von Dateien, insbesondere verbreiteten Libraryfiles, und die Verhinderung des Nachladens solcher Dateien sorgen.

Eine solche Funktion kann fest in den Browser (z.B. auch als Plugin) eingebaut werden, wodurch das separate Starten der Zwischenanwendung bzw. Middleware entfällt.

Das erfindungsgemässe Verfahren wird nachfolgend anhand von in der Zeichnung schematisch dargestellten Ausführungsbeispielen rein beispielhaft näher beschrieben bzw. erläutert. Im einzelnen zeigen
- Fig.1: eine schematische Darstellung des Grundprinzips des erfindungsgemässen Kommunikationsverfahrens;
- Fig.2: eine schematische Darstellung des Aufrufs von Daten durch den Browser der Benutzerschnittstelle;
- Fig.3: eine schematische Darstellung einer ersten Ausführungsform des erfindungsgemässen Kommunikationsverfahrens;
- Fig.4: eine schematische Darstellung einer zweiten Ausführungsform des erfindungsgemässen Kommunikationsverfahrens;
- Fig.5: eine schematische Darstellung einer dritten Ausführungsform des erfindungsgemässen Kommunikationsverfahrens;
- Fig.6: eine schematische Darstellung einer vierten Ausführungsform des erfindungsgemässen Kommunikationsverfahrens und
- Fig.7: eine schematische Darstellung einer fünften Ausführungsform des erfindungsgemässen Kommunikationsverfahrens.

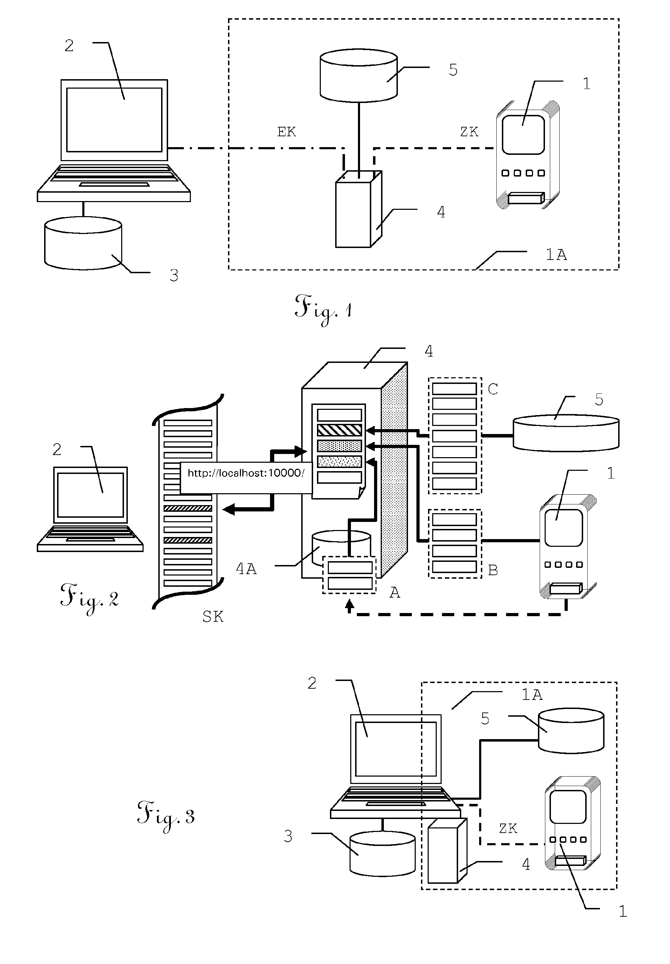

Fig.1 erläutert das Grundprinzip des erfindungsgemässen Kommunikationsverfahrens in einer schematischen Darstellung. Zur Kommunikation mit einem in den Systemressourcen eingeschränkt ausgelegten Kleinstgerät 1 wird ein skriptbasierter Browser als Benutzerschnittstelle genutzt, der auf einem Anzeigegerät 2 zur Darstellung von Daten des Kleinstgerätes 1 implementiert ist, wobei die entsprechende Software ohne spezielle Anpassungen an das Kleinstgerät 1 in einem Speichermedium 3 bereitgestellt wird, auf das die Anzeigegerät 2 direkt bzw. über schnelle Datenverbindungen zugreifen kann. Kleinstgerät 1 und Anzeigegerät 2 sind hierbei räumlich unabhängig voneinander positionierbar. Im Regelfall wird es sich um geräteseitig ohnehin vorhandene Speichermedien des Anzeigegeräts 2 handeln. Auf dem Anzeigegerät 2 läuft der skriptbasierter Browser und es werden die zur Kommunikation notwendigen Datenübertragungsprotokolle zum Datenaustausch mit einer Zwischenanwendung 4 über eine erste Kommunikationsverbindung EK genutzt. Zur Darstellung von Daten des Kleinstgeräts 1 ruft der skriptbasierte Browser innerhalb eines Skripts Dateien als Informationseinheit auf. Der Browser stellt somit eine generische Software dar, die auf dem Anzeigegerät 2 die Benutzerschnittstelle darstellt. Sie ist generisch in dem Sinne, dass sie für eine große Vielzahl verschiedener Geräte und Anwendungen geeignet ist. Der Dateninput für den Browser besteht dabei aus sog. "Skripten" und Datenfiles. Diese verkörpern Inhalt (Content), Struktur und Style der, insbesondere graphischen Benutzerschnittstelle oder -oberfläche. Die Skripte und Datenfiles sind - mindestens zum Teil - textbasiert und in einem einfachen Texteditor vom Menschen lesbar, wobei nicht textbasiert Dateien bspw. Bilddateien, gewisse Typen von Flashfiles, etc. sind, textbasiert hingegen wiederum Style- und Strukturdaten. Die Software dieser Schnittstelle ist gegebenenfalls in der Lage, auch sog. Webapplikationen als Anwendungen darzustellen und in weiterer Folge die Einbindung des Kleinstgerätes bzw. dessen Daten in eine Webapplikation zu ermöglichen.

Durch die Zwischenanwendung 4 wird eine für das Kleinstgerät 1 spezifische Datei bereitgestellt, wobei die Gerätezuordnung anhand der Dateibezeichnung, wie z.B. dem Dateinamen oder der URL, erfolgt. Die Zwischenanwendung 4 kann als unabhängige Einheit mit eigener Hardware realisiert werden oder aber als Software auf einer anderen Plattform, die gemeinsam mit anderen Anwendungen genutzt wird, implementiert werden. Sie greift dabei auf einen Speicher 5 zu, der in der Plattform bzw. Hardware der Zwischenanwendung 4 selbst angeordnet sein kann oder aber extern über eine Datenverbindung zur Verfügung gestellt wird, oder beides. Hierbei wird für die Zwischenanwendung 4 eine Einheitlichkeit und Eignung für mehrere Anwendungen angestrebt, das heisst eine universelle und nicht für das jeweilige Kleinstgerät 1 spezifische Auslegung, wobei erfindungsgemäss insbesondere eine einzige Zwischenanwendung 4 die Kommunikation für eine Vielzahl von unterschiedlichen Kleinstgeräten ermöglicht. Die Zwischenanwendung 4 und ihre Funktionen werden speziell offen gehalten für die Verwendung mit verschiedenen Kleinstgeräten 1, mit unterschiedlichen Speichermöglichkeiten und Rechengeschwindigkeiten bis hin zu Single-Chip-Mikroprozessoren, sowie mit verschiedenen Arten der Verbindung wie Bluetooth, ZigBee, WiFi, DECT, NFC, RFID, etc. Das heißt, es handelt sich um eine generische, einmalig zu installierende Software (PC, Mobiltelefon, Set-Top-Box), die sich vom Zeitpunkt der Erstinstallation gegebenenfalls Library-Updates und/oder Protokoll-Updates von zentraler Stelle im Internet holt, jedoch nicht mehr neu zu installieren ist, wenn ein neues Kleinstgerät angeschlossen wird.

Die Zwischenanwendung 4 steht ihrerseits über eine zweite Kommunikationsverbindung ZK mit dem Kleinstgerät 1 in Verbindung, wobei die Datenübertragungsrate der zweiten Kommunikationsverbindung geringer als die der ersten Kommunikationsverbindung ist, insbesondere kleiner als 3 Mbps ist oder ggf. auch nur 9600 bps beträgt, und Rechenleistung und Speicherplatz des Kleinstgerätes 1 geringer als Rechenleistung und Speicherplatz der Zwischenanwendung 4 sind, insbesondere der Speicherplatz kleiner als 100 kB oder maximal 32 kB ist.

Die Auslegung der zweiten Kommunikationsverbindung ZK ist dabei insbesondere der für den Einsatz von allgemein genutzten und entsprechend leistungsfähige Systemkonfigurationen ausgelegte Kommunikationsprotokolle limitierender Faktor, was vor allem für TCP/IP- oder HTTPbasierte Lösungen gilt.

Die für das Kleinstgerät 1 erforderliche Datenhaltung und Datenbereitstellung wird über die Zwischenanwendung 4 abgewickelt, wobei über diese die Schnittstelle zum Anzeigegerät 2 und dem Browser definiert wird, so dass diese Konfiguration aus der Sicht des Browsers als ein virtuelles Kleinstgerät 1a mit einer grösseren Leistungsfähigkeit erscheint.

Damit erfolgt im Zusammenwirken der Komponenten ein Übertragen von dem Kleinstgerät zugeordneten Daten an das Anzeigegerät 2 durch die Zwischenanwendung 4, wobei die Daten vom Kleinstgerät 1 synchron oder asynchron zum Etablieren der Kommunikationsverbindung an die Zwischenanwendung 4 übertragen werden. Der Browser ruft lediglich die für das Kleingerät 1 spezifische Datei im Skript auf. Das Anpassen der zu übertragenden Daten durch die Zwischenanwendung 4 erfolgt im Hintergrund so, dass die Datei als für das Kleinstgerät spezifische Datei bereitgestellt, wobei diese spezifische Datei durch das Anzeigegerät 2 anhand der Dateibezeichnung dem Kleinstgerät 1 zuordenbar ist, so dass eine Darstellung mittels skriptbasierten Browser ermöglicht wird und die Zwischenanwendung 4 als Middleware für das Anzeigegerät 2 die funktionale Schnittstelle zum Kleinstgerät 1 definiert. Neben des Aufrufs einer einzigen Datei, die bspw. den zeitasynchron über die langsame zweite Kommunikationsverbindung heruntergeladenen Daten des Kleinstgerätes 1 enthalten kann, können auch komplexere Datenstrukturen bereitgestellt und browserseitig jedoch durch eine einzelne Datei verkörpert werden, insbesondere durch Einrichten einer Webserver-Datenstruktur aus nur aus einer Default-Datei und einer gepackten Datei, wobei die gepackte Datei Skriptfiles enthält, so dass die Zwischenanwendung 4 in Beantwortung einer Anfrage des Anzeigegerätes 1 an das Kleinstgerät ein automatisches Aufrufen und Entpacken der gepackten Datei vornimmt.

Beim Anpassen können die zu übertragenden Daten auch ergänzt werden, wobei ggf. die Zwischenanwendung 4 die Ergänzungen von einer Speichereinheit 5 abruft. Ebenso kann die Zwischenanwendung 4 eine Vereinfachung des Datenübertragungsprotokolls für das Kleinstgerät 1 vornehmen, insbesondere durch Reduzierung auf eine Teilmenge des Hypertext-Transfer-Protocols, und/oder die zu übertragenden Daten konvertieren, insbesondere durch Daten-Komprimierung oder Daten-Entkomprimierung.

Als Dateibezeichnung können beispielsweise der Dateinamen oder eine URL verwendet werden, wobei auch ein Hash-Wert in den Dateinamen oder eine entsprechende URL aufgenommen werden kann.

Grundsätzlich kann auf die gleiche Weise auch eine Datenübertragung von dem Anzeigegerät 2 über die Zwischenanwendung 4 auf das Kleinstgerät 1 erfolgen. Um eine örtlich nicht beschränkte Kommunikation zu ermöglichen, können die erste und/oder zweite Kommunikationsverbindung EK, ZK vorteilhaft über das Internet realisiert werden. Grundsätzlich können erste und/oder zweite Kommunikationsverbindung EK, ZK jedoch in jeder üblichen Weise realisieret werden, z.B. drahtgebunden, durch optische Verbindungen oder verschiedene draht- bzw. kabellose Verbindungen. Auch kann durch das Anzeigegerät 2 eine Einbindung von Funktionalitäten des Kleinstgerätes 1 in Anwendungen als Webapplikationen im Internet erfolgen.

Der Aufruf von Daten durch den Browser der Benutzerschnittstelle und die Funktion der Zwischenanwendung 4 wird in Fig.2 veranschaulicht. Das Anzeigegerät 2 ruft beim Abarbeiten eines Skriptes SK (z.B. des direkt im Kleinstgerät gespeicherten sog. Default Files "/index.html" oder "/") eine darin eingetragene Dateibezeichnung auf, die beispielsweise ein Dateiname oder die mit der Zwischenanwendung verbundene Internet-Adresse bzw. URL sein kann, was unten näher erläutert wird. Der Zugriff erfolgt somit auf eine über die Zwischenanwendung 4 bereitgestellte Datei. Diese Datei wird von der Zwischenanwendung 4 so adaptiert und ggf. ergänzt, dass eine Darstellung bzw. Abarbeitung durch den Browser auf dem Anzeigegerät 2 möglich wird. Dabei werden alle notwendigen Schritte im Hintergrund abgewickelt, so dass der Charakter eines virtuellen Kleinstgerätes erreicht wird. In diesem Beispiel stellt die Zwischenanwendung eine Datei bereit, die Anteile bzw. Inhalte aus drei verschiedenen Quellen zusammenführt. Zum einen ruft die Zwischenanwendung 4 ggf. in einem Vorratsspeicher 4A gehaltene Cache-Daten A auf, die aus früheren Kommunikationen mit dem Kleinstgerät 1 bereitgehalten werden. Dort nicht vorhandene bzw. nur vom Kleinstgerät 1 bereitstellbare Daten werden hinzugefügt, indem diese als Gerätedaten B vom Kleinstgerät 1 oder soweit möglich extern geladen, beispielsweise durch von einem externen Speicher 5 heruntergeladen Ergänzungsdateien C vervollständigt werden.

Die Zwischenanwendung 4 übernimmt hierbei alle erforderlichen Tätigkeiten, wie z.B. Etablieren von Kommunikationsverbindungen und Übertragen von Daten, Komprimieren oder Entkomprimieren von Dateien etc. Aus Sicht des Anzeigegerätes 2 erfolgt hingegen lediglich ein Zugriff auf bzw. Aufruf der im Skript angeführten Datei, der anhand ihrer Dateibezeichnung möglich ist.

Die Datenvorratsspeicherung in der Zwischenanwendung 4 als Puffer-Speichern oder Caching für das Kleinstgerät 1 kann auf verschiedenste Weise realisiert werden, wobei erfindungsgemäss insbesondere drei spezielle Varianten möglich sind
(1) "Standard Library" Datei Caching: Dieser Mechanismus betrifft Dateien, welche nicht oder nicht mehr auf Kleinstgeräten gespeichert sind, aber immer noch verwendet bzw. durch Dateien des Kleinstgerätes 1 genutzt werden können. Deshalb betrifft dies zum Installationszeitpunkt bekannte und definierte Dateien, was beispielsweise Standard-Javascript-Libraries oder Firmenlogos umfasst. Beispiele für solche Javascript-Dateien sind rico.js oder prototype.js, die ungefähr 70-100 kB Speicherplatz belegen und somit den verfügbaren Speicherplatz in vielen Kleinstgeräten überschreiten würden. Um die Speicherplatzanforderungen zu minimieren und die Datenintegrität zu gewährleisten können diese Dateien zuerst durch Entfernen unnötiger Zeichen, wie z.B. Tabulatorzeichen oder Leerzeichen, optimiert werden. Danach kann der Hash-Wert der Datei inklusive Dateinamen und Dateitypergänzung berechnet werden, wofür bekannte Algorithmen, wie z.B. SHA1 zur Verfügung stehen. Dieser Hash-Wert kann dann an den Dateinamen in einer üblichen Codierung angehängt werden, z.B. als Base64 oder HEX-Code. Als Ergebnis trägt die Datei eine Dateibezeichnung, welche den Hash-Wert beinhaltet, so dass eine definierte und global eindeutige Referenzierung mit Integritätsprüfung möglich ist.
   a. Beispiel für rico.js: Angenommen, der SHA1-Hash-Wert der Datei rico.js (inklusive Dateiname und Dateitypergänzung zu Beginn der Datei, sowie dem Inhalt, jedoch ohne "SHA-1=..."-Ergänzung des Dateinamens, die erst später angehängt wird) sei beispielsweise "556c445491f77f4ab36a17108e5455629483991d", Dann kann die Zwischenanwendung 4 den Dateinamen "rico.js-SHA-1=556c445491f77f4ab36a17108e5455629483991d"
      für eine Datei verwenden, welcher gespeichert und ggf. an den Browser übertragen wird, ohne dass ein Dateiname vom Kleinstgerät abgefragt werden muß. Dies bedeutet, dass der gehashte Dateiname wie folgt definiert wird <Original-Dateiname + Ergänzung> + "SHA1=" + <Hash-Wert des Dateiinhaltes inklusive Dateiname und Ergänzung, gemäss SHA1 Algorithmus, codiert in Base64>
   b. Die Zwischenanwendung 4 führt ihre eigene Liste von Dateien, welche bereitgestellt werden können.
   c. Die Zwischenanwendung 4 kann den eigenen Bestand an Library-Dateien über eine LAN- oder Internetverbindung aktualisieren oder ergänzen, so dass auch Dateien ergänzt werden können, die erst nach dem Installationszeitpunkt verfügbar waren.
   d. Die Zwischenanwendung 4 kann Firmen-Logos oder Graphiken bereitstellen, z.B. von mittleren oder grossen Unternehmen, die an einer schnellen und optisch ansprechenden, individualisierten eigenen Präsenz interessiert sind, obwohl das Kleinstgerät selber nicht in der Lage ist, solche Graphiken zu speichern.
   e. In diesem Fall hat die Verwendung eines Hash-Wertes in der Dateibezeichnung den Vorteil, dass die Zwischenanwendung 4 in der Lage ist, herauszufinden, ob es den Aufwand lohnt, zu prüfen, ob es im Cache gehalten wird, da andere Dateien normalerweise nicht so lange Bezeichnungen in diesem Format aufweisen. Typischerweise hat ein SHA1-Wert eine Länge von 30 Bytes, wenn dieser Base64-codiert wird, oder 40 Bytes, wenn dieser hex-codiert wird.
(2) Langzeit-Caching: Dieser Caching-Mechanismus betrifft Dateien, welche tatsächlich im Kleinstgerät 1 gespeichert und heruntergeladen warden, sobald die Datei zum ersten Mal benötigt wird. In der Folge wird diese Datei in der Zwischenanwendung 4 gespeichert bzw. bereitgehalten, so dass entsprechende Anfragen beantwortet werden können, ohne dass über die langsame zweite Kommunikationsverbindung ZK Daten übertragen werden müssen. Auch in diesem Fall ist es empfehlenswert, einen Hashing-Mechanismus zu nutzen, um sicherzustellen, dass eine Anfrage bezüglich eines Dateinamens eindeutig ist und ohne Fehler bzw. Verwechslung beantwortet werden kann. Die auf diese Weise zwischengespeicherte Datei ist NICHT einem konkrete Kleinstgerät oder einer konkreten URL zugeordnet, im Gegensatz zum üblichen Browser-Caching-Mechanismus.
(3) Kurzzeit-Caching: Der dritte Caching-Mechanismus dient einer Beschleunigung des Antwortverhaltens des Kleingerätes 1 für die regelmässig verwendeten STATIC-Dateien, wie z.B. style-Dateien, HTML-Dateien, .js-Dateien, etc. Diese werden für eine erneute Nutzung im Kurzzeit-Cache gehalten. Kurzzeit-Cache meint in diesem Zusammenhang, dass der Cache-Speicher nach einer gewissen Zeit oder einem Ereignis, wie z.B. der Unterbrechung oder dem Abbau einer Übertragung von Daten von diesem Gerät, wieder freigegeben bzw. überschrieben wird. Ein Hashing-Mechanismus wird hier nicht benötigt. Das Kurzzeit-Caching kann anhand der Fileextension gesteuert sein (.html, .js, .css-Dateien werden als statische Dateien gehandhabt), oder aber mit dem oben beschriebenen http-Eintrag "HTTP...Expires:" vor dem eigentlichen Daten-Content, wodurch eine zeitlich befristetes Kurzzeitcaching auch bei ansonsten nicht-statischen Dateien mit dynamischem Inhalt.
(4) Nicht zu cachende Dateien: Dies betrifft Dateien, welche veränderlichen Inhalt, z.B. serverseitige Einbindungen (SSIs), beinhalten und daher nicht statisch sind, sondern dynamisch durch das Kleinstgerät 1 geändert werden, bevor sie zum anfragenden Browser gesendet werden.

Im Stand der Technik erfolgt die Vorratsspeicherung bzw. Pufferung hingegen in anderer Weise.
(1) Das Caching von Dateien, die der Browser im Internet bzw. von einem Internet-Server abruft, wird basierend auf HTTP-Einträgen im HTTP-Header gesteuert. Beispielsweise gibt es den Eintrag: "Expires: Fri, 30 Oct 1998 14:19:41 GMT<CR><LF>" Abhängig hievon wird der Browser dieses File als abgelaufen interpretieren und nicht cachen, oder eben bis zum angegebenen Datum im Vorrat speichern und von dort aus abrufen, ohne den Request ins Internet zu senden. Der Browser cacht Files im Zusammenhang mit einer konkreten URL, von der das entsprechende File kommt. Nutzungshindernis ist dabei, dass bei Browsern das Cachingverhalten vom Benutzer ein- und ausgeschaltet werden kann, und Browser von verschiedenen Herstellern unterschiedliches Verhalten zeigen.
(2) Durch das W3-Consortium ist eine Hash-Wertbasierte Vorratsspeicherung definiert. Hierbei handelt es sich um eine Erweiterung des HTTP-Protokolls, und es ist somit für Kleinstgeräte nicht geeignet. Bei ihrem Ansatz wird der Hashwert ("Checksumme") in einer der HTTP-Zeilen bzw. in Metadaten mitgeliefert. Somit ist ein Request nach einem solchen File komplizierter aufgebaut, da der Inhalt von Header-Zeilen konkret vorgegeben werden muss, nicht nur der Filename-Request selber, oder aber dieser ist gar nicht möglich (HTML). Auf dem Webserver wird die Datei unter dem Dateinamen gespeichert, die eindeutige Kennung hingegen ist wiederum in Metadaten gespeichert, oder muss errechnet werden. Beispielsweise kann eine http-Header-Zeile lauten: "Content-ID: urn:sha:7afd....<CR><LF>"

Erfindungsgemäss ist es ein besonderes Merkmal, dass die eindeutige Kennzeichnung als zu cachende Datei im Dateinamen bzw. der Dateibezeichnung selber, nämlich durch die Angabe des Hash-Wertes, erfolgt. Es sind keine Metadaten erforderlich. Die konkrete Syntax für diese Kennzeichnung kann dabei in verschiedenen Formen ausgeführt sein, ausschlaggebend ist hier jedoch, dass diese Kennzeichnung nicht in einer der HTTP-Header-Zeilen enthalten ist, sondern direkt in der Dateibezeichnung enthalten ist, z.B. im Dateinamen oder in der angefragten URL, und somit in einer href- oder src-Angabe eines HTML- oder Javascript-Files automatisch enthalten ist, durch alle Proxies hinweg übertragen wird, und - sofern die Anfrage nicht von einem Caching-Speicher beantwortet werden konnte - auch in dieser eindeutigen Form beim Kleinstgerät ankommt. Ziel dieser Vorgehensweise ist es, dass eine konkrete Datei (mit eindeutiger Kennzeichnung) genau einmal heruntergeladen wird, und für alle folgenden Anfragen nach genau dieser Datei im Vorratsspeicher gespeichert ist und hinkünftig von dort gelesen wird, dies unabhängig vom gerade geöffneten Browser und von der konkreten Browsereigenen Caching-Einstellung, sowie auch unabhängig vom gerade angefragten Device und seiner URL. Somit stellt ein einmal gecachtes File auch anderen Geräten zur Verfügung, was insbesondere bei Standardskripten sinnvoll ist.

Der Caching-Mechanismus ist dabei sehr einfach zu implementieren:
(1) Implementierung in einer Zwischenanwendung 4, die auf einem PC oder Gerät läuft, auf dem auch der Browser zur Darstellung der Skripte läuft, wie dies bspw. in Fig.3 dargestellt wird (Programmierung gemäss obiger Vorgabe, letztlich ist bei jeder Anfrage lediglich zu überprüfen, ob gemäss Syntaxvorgabe eine eindeutige Kennzeichnung - "-SHA-1=...." enthalten ist, falls ja, im Vorratsspeicher suchen, falls nicht vorhanden, dann die Anfrage weiterschicken oder/und in einem vorgegebenen Online-Ort anfragen.)
(2) Implementierung in einer Zwischenanwendung 4, die in einem Router angeordnet ist, über den ein Kleinstgerät 1 an das Internet angebunden ist. Solche Router haben üblicherweise deutlich geringere Rechenleistungen als ein moderner PC. Aufgrund des einfachen Caching-Mechanismus lässt sich die erfindungsgemäße Vorratsspeicherung auch hier effizient implementieren und betreiben.
(3) Implementierung in einem Online-Webserver, welcher ein Proxy für ein konkretes Kleinstgerät 1 darstellt und alle Anfragen an das (angemeldete) Kleinstgerät 1 weiterleitet, sofern sie nicht eindeutig gekennzeichnet waren und entweder im Vorratsspeicher des Online-Webservers selber gefunden wurden oder aber an einem eigens bezeichneten Online-Ort.

Die Dateien werden aufgrund der eindeutigen Kennzeichnung mittels Angabe des Hashwertes im Dateinamen global eindeutig. Ihre Vorratsspeicherung ist nicht mehr einer konkreten URL zuzuordnen, genausowenig wie einem konkreten Kleinstgerät 1. Dabei können einer oder mehrere Onlineorte als zentrale Speicherorte für zu cachende Dateien vorgesehen werden, was insbesondere bei Standard-Library-Dateien Sinn macht (z.B. Javascript Standard Dateien).

Weder der Browser, noch Router oder Webserver (inklusive jene der Kleinstgeräte 1) müssen verändert werden, da es sich um "normale" Datei-Anfragen handelt, ohne Veränderung der Metadaten oder HTTP-Header. Auf dem Webserver wird die Datei unter dem Dateinamen gespeichert, der die eindeutige Kennung enthält. Eine separate Behandlung einer eindeutigen Kennung als zusätzliche (z.B. Meta-)Information entfällt. Somit wird dieser Ansatz tauglich für Kleinstgeräte 1. Voraussetzung ist lediglich, dass irgendwo auf der Datenübertragungsstrecke zwischen Browser bzw. erster Recheneinheit 2 und Kleinstgerät 1 ein Caching-Proxy bzw. die Zwischenanwendung 4 liegen muss, z.B. direkt vor dem Kleinstgerät (Middleware), beim Router (Middleware als "Embedded Middleware") oder Online.

Allerdings muss eine Datei nicht unbedingt eine eindeutige Kennung enthalten, z.B. bei Dateien mit dynamischem Inhalt.

Der Caching-Proxy bzw. die zweite Recheinheit 4, welche diesen Caching oder Vorratsspeicherungsmechanismus implementiert hat, übt automatisch eine bereinigende Wirkung aus: wenn der Hash-Wert nicht dem aus dem Inhalt errechneten Wert entspricht, dann wird die Datei als falsche Datei betrachtet, die aus dem Vorratsspeicher gelöscht werden kann bzw. soll. Somit ist die Integrität des Dateiinhalts gewährleistet - eine Datenveränderungsattacke führt dazu, dass der Dateiinhalt diese Prüfung nicht besteht und somit der Inhalt nicht an den Browser ausgeliefert wird. In gewissen Fällen, z.B. bei rein internen Netzwerken ohne Verbindung zu anderen externen Netzwerken, kann diese Prüfung entfallen.

Es ist vorteilhaft, wenn der Dateiname zudem einen Hinweis auf den Erstellungszeitpunkt der Datei enthält. Eine Datumsmarke kann verwendet werden, um ein automatisches Aktualisieren der lokalen Library zu ermöglichen. Beispielsweise kann ein automatisches Aktualisieren an jedem Monatsersten vorgesehen werden. Eine Zeitmarke erhöht zudem die Lesbarkeit für das menschliche Auge, da die reinen Hash-Werte weniger Aussagekraft aufweisen und eine Suche oder Betrachtung anhand der Datumsangaben leichter fällt. Die neu zu ladenden Dateien können dann anhand ihres Datums identifiziert und automatisch geladen werden.

Die Zwischenanwendung 4 kann auch regelmässig und/oder wiederholt eine Anfrage an das Kleinstgerät 1 senden und das Antwortverhalten analysieren, z.B. kann die Anfrage nur den Header der index.html-Datei betreffen und das Kommando "HEAD<SP>index.html" verwenden. Aus einer korrekten und zeitgerecht erfolgen Antwort des Kleinstgerätes 1 kann darauf geschlossen werden, dass die zweite Kommunikationsverbindung ZK in Ordnung ist. Für jede Anfrage auf einer sehr niedrigen Schicht des Protokolls wird die Antwort auf die HEAD-Anfrage nur das EOF-Zeichen sein. Hierbei inkludiert das Protokoll zwar keine HTTPartigen Header, die vom Kleinstgerät 1 selbst übermittelt werden, aber die Zwischenanwendung 4 ergänzt entsprechende HTTP-Header-Informationen und sendet die HTTP-Anfrage mit zugehörigem Header an den anfragenden Browser bzw. die Anzeigegerät 2 zurück.

Ausserdem kann die Überwachung der Verbindung durch die Zwischenanwendung 4 auch - anstelle des Sendens einer eigenen HEAD-Anfrage - auch durch Überwachung der Anfragen des Browsers an die verschiedenen Kleinstgeräte 1 erfolgen, so dass festgestellt werden kann, ob eine funktionsfähige Verbindung besteht oder nicht. Somit muß im Falle von ohnehin erfolgenden Anfragen durch den Browser an das Kleinstgerät 1 für einen gewissen Zeitraum keine eigene HEAD-Anfrage, die durch die Zwischenanwendung 4 initiiert wird, erfolgen.

Es ist davon auszugehen, dass in Zukunft neue Datenübertragungsprotokolle und/oder neue Verbindungsschnittstellen standardmässig in Anzeigegeräten verfügbar sein werden. Diese werden sukzessive hinzukommen, daher ist es sinnvoll, die Möglichkeit eines flexiblen Updates während des Betriebes der Zwischenanwendung 4 von zentraler Stelle im Internet vorzusehen. Dies lässt sich beispielsweise realisieren, indem Teile der Software für die Zwischenanwendung 4 in einer Programmiersprache geschrieben werden, die nachträgliches Hinzuladen von Code ermöglicht. Dies ist z.B. bei Python der Fall. Hier kann nachträglich und im laufenden Zustand (dynamisch) Code geladen werden (z.B. durch Herunterladen von zentraler Stelle im Internet) und sodann ausgeführt werden.

Beim Anschließen eines neuen Kleinstgerätes 1 an das Anzeigegerät wird es entweder erkannt, oder aber der Benutzer muss der Zwischenanwendung 4 aus einer Auswahl bekannt geben, um welches Produkt es sich handelt. Die Zwischenanwendung 4 holt sich sodann den entsprechenden Code und führt ihn aus. In weiterer Folge wird dieser Code in die Liste der bisher verwendeten hinzugeladenen Codes aufgenommen und kann bzw. soll beim automatischen Scannen von Verbindungen regelmässig angewendet werden.

Im folgenden werden einige Beispiele für Kleinstgeräte 1 dargestellt, für die das erfindungsgemässe Kommunikationsverfahren zur Anwendung kommen kann.

### o Produktbeispiel 8-bit-Mikrocontroller angebunden an einen PC oder anderes Browser-Anzeigegerät

Kleine Mikroprozessoren finden ihren Einsatz in einer Vielzahl von Anwendungen des privaten und beruflichen Lebens, ohne dass sie als solche komplexe elektronische Systeme wahrgenommen werden. Sie befinden sich in Haushaltsgeräten, in einfachen Messgeräten, in Fahrzeugen, in Chipkarten, in Uhren, in Heizungssteuerungen, in Getränkeautomaten, d.h. in nahezu allen elektronischen Geräten. Geräte mit solchen Mikroprozessoren verfügen häufig über eine nur sehr eingeschränkt nutzbare und nichtintuitive Bedienungsoberfläche, die zudem von Gerät zu Gerät unterschiedlich ausgelegt ist. Das erfindungsgemässe Verfahren erlaubt bei Vorliegen einer Verbindung das benutzerfreundliche Bedienen und Einstellen eines jeden Gerätes via browserfähigem Anzeigegerät.

Ein erstes einfaches Beispiel stellt die Verwendung eines Bluetooth-Moduls für einen Türöffner dar, welches im Modul - also ohne weiteren Mikroprozessor - eine komplette Verwaltung von mehreren zum Zugang berechtigten Benutzern und ihre Verbindungsdaten via Bluetooth (Mobiltelefon) bewerkstelligt, und AJAX-Seiten auf den Browser des Mobiltelefons eines solchen Benutzers via Bluetooth schickt. Eine einfache Tür-Auf-Funktion wird mit einem angeschlossenen und vom Modul gesteuerten Relais bewerkstelligt, welches den Türöffner mit Strom versorgt.

Zudem kann die RSSI-Funktion von handelsüblichen Bluetooth-Modulen und -Chips konkret verwendet werden, um distanzabhängig Vorgänge in Ganz zu setzen, wie z.B. im obigen Beispiel das Öffnen einer Tür oder aber auch den Aufbau einer Verbindung.

Ein weiteres Beispiel stellt eine SmartCard oder JavaCard als Webserver dar. Eine SmartCard oder ein Gerät mit integriertem SmartCard-Chip enthält einen "Single-Chip"-Mikroprozessor, der eine Leistung eines kleinen Rechners erbringen und eine Speicherkapazität von 100 kB und mehr haben kann. Dies ist zu wenig für die Realisierung vollständiger Internetprotokolle oder HTTP-Protokolle (IP,TCP,HTTP), jedoch hinreichend für die Verbindung im Rahmen des erfindungsgemässen Verfahrens. Darüber hinaus sind SmartCard-Chips speziell als Sicherheitselemente ("secure elements") ausgeführt, da sie Schlüsseldaten selbst sicher generieren und speichern können, wobei der Zugriff auf diesen Schlüssel ungleich schwieriger ist als bei anderen Mikrochips. Beispiele hierfür sind z.B. Chips der Familie SmartMX von NXP.

Ein einfacher Datei-Server, der GET-Anfragen auswertet und damit beantwortet, dass er das entsprechende File als Byte-Sequenz zurücksendet und ggf. auch Variablenzuweisungen gemäss Anhang in der GET-Anfrage (nach dem ,?') auswertet und ausführt, benötigt einen Speicherplatz von ca. 5-10 kB und ist somit relativ leicht neben allfälliger Anwendungssoftware auf einem solchen Chip unterzubringen.

Dieser sehr eingeschränkte Speicherplatz ist aber hinreichend, um die folgenden Funktionen unterzubringen.

Die Übertragungsgeschwindigkeit von SmartCard bzw. dem entsprechenden von dem SmartCard-Chip zur Gegenstelle kann ebenfalls limitiert sein: bei RFID kann dies je nach Lesegerät bei einigen 10 kbps liegen und bei NFC um 400 kbps erreichen, wobei diese Raten aber im Falle von elektromagnetischen Einflüssen der Umgebung geringer sein können. Dies ist dennoch zu wenig, um den Inhalt umfangreicher Dokumentenseiten rasch auf ein Anzeigegerät zu bringen, ohne den Nutzer mit Wartezeiten zu konfrontieren, welche die üblichen Download-Zeiten im Internet übersteigen.

Somit kann auch in diesem Szenario das erfindungsgemässe Kommunikationsverfahren Verwendung finden und die Verbindung zum Kleinstgerät 1 ermöglichen, wobei auch Datei-Inhalte in der erfindungsgemässen Weise im Cache zwischengespeichert werden können.

JavaCard ist eine besondere Ausführung von SmartCards, bei der nachträglich bzw. nach Ausgabe der Karte an den Benutzer in der Programmiersprache Java geschriebene Applikationen (Javacard-Applets) auf diese SmartCards geladen werden können. Auf diese Weise wird eine solche Chipkarte zu einer Karte welche multiple Applikationen bedienen kann. Zum Beispiel kann ein und dieselbe Karte sowohl für Geldbezüge über Bankautomaten als auch für die Authentifizierung beim Eintritt in ein Gebäude verwendet wird. Diese Multiapplikationsfähigkeit von JavaCards ist bisher von den Herstellern zögerlich angenommen worden, vermutlich auch deswegen, weil die Corporate Identity aus Sicht von Anwendungsanbietern (z.B. einer Bank) zuwenig deutlich erscheint, wenn z.B. die Funktion des Geldbezuges von einem Bankkonto auf einer fremden JavaCard geladen werden könnte. Die Darstellung der Corporate Identity wird durch das oben dargestellte Bereithalten von Darstellungsinhalten im Dateispeicher der JavaCard für jede Anwendung verbessert. Beispielsweise kann jeder Anwendungsanbieter (Bank, Gebäudeschliesstechnikanbieter) seine gewünschte Darstellungsweise inklusive Logo, Styles, etc. auf der JavaCard unterbringen, um sicherzustellen, dass sich diese Karte gemäss seinen Vorstellungen dem Benutzer auf einem Anzeigegerät präsentiert.

Diese Webservertechnologie, z.B. implementiert in einem SmartCard Chip oder JavaCard Chip, ermöglicht zudem das Unterbringen anspruchsvoller, auf den jeweiligen Benutzer abgestimmter Bedienungsoberflächen. Kleinstgerät 1 und/oder die Zwischenanwendung 4 erfahren, um welche Benutzerklasse es sich handelt, und können dann nachfolgend die entsprechenden vorgesehenen, für diese Benutzergruppe oder auch für diesen konkreten Benutzer individualisierten und ggf. gespeicherten Bedienseiten darstellen. Beispielsweise kann sich ein Kleinstgerät 1 auf unterschiedliche Art und Weise anzeigen, je nachdem ob sich ein Servicetechniker, ein Administrator, ein Senior oder ein Jugendlicher eingeloggt hat.

Das oben beschriebene Konzept der Vorratsspeicherung vorbestimmter Daten in der Zwischenanwendung 4 ermöglicht es, speicherintensive Files wie Firmenlogos, Graphiken, Librarydateien, nicht auf dem Kleinstgerät 1 sondern schneller, d.h. idealerweise instantan, von der Zwischenanwendung 4 aus an den Browser zu liefern. So wird es möglich, auch auf kleinen Chips wie SmartCard-Chips ansprechende Darstellungsseiten samt graphischen Inhalten unterzubringen, die den Vorstellungen der Corporate Identity von Unternehmen entspricht.

Ein JavaCard-Chip hat normalerweise keine Input-Output-Pins, sondern ist als reines Servergerät ausgeführt. Der Hauptgrund für diese Tatsache liegt evtl. darin, dass es ein Sicherheitsrisiko darstellen würde, dem JavaCard-Chip und den darauf laufenden nachladbaren Applikationen Zugriff zu den IO-Pins zu geben, und dieses Sicherheitsrisiko nur in komplizierten Anordnungen (z.B. fixer vordefinierter lokaler Schlüssel für 10-Zugriff) zu lösen ist. Im Folgenden wird eine einfache und sichere Anordnung dargestellt, welche es ermöglicht, einen JavaCard-Chip in eine Hardware einzubauen, welche IO-Pins enthält, die von ausserhalb nicht oder mit unverhältnismässig hohem Aufwand angesteuert werden können. Dies wird durch das Vorschalten eines einfachen Logikchips oder einer einfach Logikfunktion bewerkstelligt, der nur alle 7-Bit-Daten - also das 8. Bit nicht gesetzt - an den SmartCard-Chip weiterleitet, alle anderen werden verworfen. Somit gelangen nur ASCII-Daten und/oder UTF-7-encodierte Daten - oder analoge - zum SmartCard-Chip. Dies ist hinreichend, da der oben definierte GET-Befehl dieser Anforderung entspricht. Gleichzeitig wird definiert, dass die SmartCard NUR DATEN mit 7-Bit - also mit nicht gesetztem 8. Bit - als Datei-Antwort zurücksenden darf. Dies ist bei Verwendung des oben angegebenen Protokollbeispiels keine Beschränkung, da es sich dort wiederum ohne Limitierung der Funktion um reine ASCII-Zeichen handeln kann. Nun wird definiert, dass jeglicher Datenstrom mit einem gesetzten 8. Bit als Anweisung für den Logikbaustein bedeutet, dass er seine IO-Pins entsprechend setzen oder auslesen und zurückmelden - mit gesetztem 8. Bit - soll. Es ist allerdings zu beachten, dass die Eigenheiten der Byte-basierten Kommunikation von SmartCard-Chips gemäss ISO 7816 zu beachten sind, sog. APDUs, und fixe normbasierte Befehle zu erkennen sind, bevor ein IO-Pin demgemäss gesetzt wird. Vorgeschlagen wird eine Kolonne von mehr als 3 aufeinanderfolgenden Bytes, welche alle das 8. Bit gesetzt haben, als gültige Anweisung für das Setzen oder das Auslesen eines IO-Pins zu definieren.

Die Datenkommunikation bei einer XML- oder .json-basierten Kleinstgerät-Steuerung vom Anzeigegerät - Browser via Zwischenanwendung 4 - zum Kleinstgerät 1 erfolgt im konkreten Ausführungsbeispiel durch entsprechende Antworten auf GET-Anfragen, wobei diese Antworten SSIs enthalten.

Als Beispiel: ein Kleinstgerät 1, welches ein Relais ansteuert und somit auch eine Variable mit dem Relaiszustand kennt ("REL"), kann mittels folgender .xml-Datei den Zustand des Relais an den Browser senden, nachdem dieser das File REL.xml angefragt hat ("GET /REL.xml" gesendet hat):

Inhalt der REL.xml-Datei:

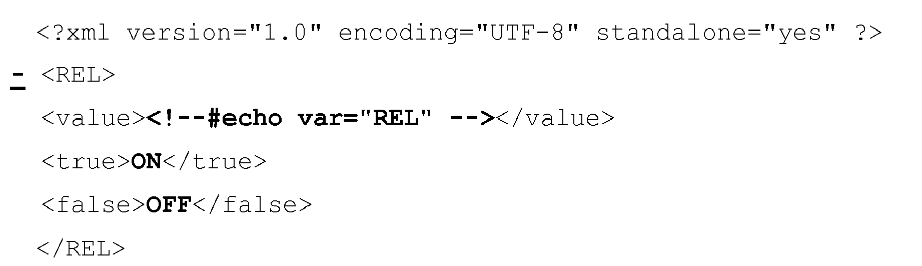

Hierbei handelt es sich bei der Zeichenkette <!--#echo var="REL" --> um den SSI-Tag, welcher die Variable REL referenziert. Der anfragende Browser erhält für den Fall, dass REL=1 ist, folgende Antwort:

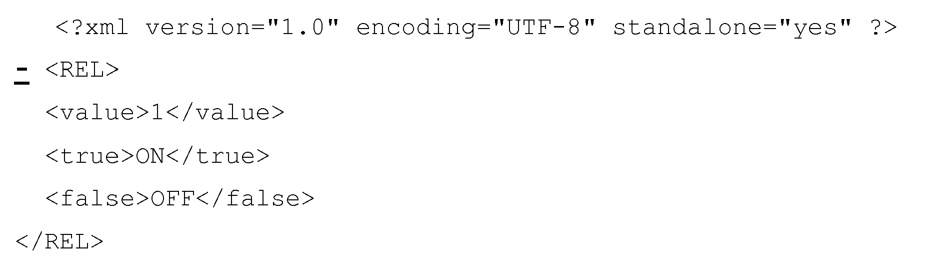

Dieses File lässt sich mit heutiger Browsersprache (JavaScript) leicht auswerten und im Browser sodann der Text "ON" an vordefinierter, für den Benutzer gut sichtbarer Stelle anbringen.

Inhalt eines beispielhaften .json-Files "REL.json", in welchem die Variablen REL und DEVNAME dynamisch inkludiert werden:

```
 {
 "REL":"<!--#include file="REL"-->",
 "DEVNAME":"<!--#include file="DEVNAME"-->"
 }
```

Das Kleinstgerät sendet sodann bei Anfrage dieses Files REL.json und bei eingeschaltetem Relais folgenden Dateninhalt zurück (Beispiel):

```
 {
 "REL":"1",
 "DEVNAME":"Relais_Name"
 }
```

Dieser dynamische Dateieninhalt kann mit Vorteil anstatt über SSI auch direkt durch Aufrufen einer Funktion in der Firmware erstellt werden. Dann handelt es sich bei REL.json nicht um ein File des Filesystems, sondern um ein in der Firmware enthaltenen Code-Teil, der im Endeffekt die gewünschte Antwort erstellt.

Die oben dargestellten .json oder .xml-basierten Inhalte bezogen sich auf die Darstellung von Daten in einem bekannten Format. Dies ist bei .cgi-Dateien nicht notwendigerweise der Fall. Daher wird diese Dateiendung verwendet, um andere dynamische Inhalte zu kennzeichnen, die nicht in der Form der bekannten JSON- oder XML-Syntax dargestellt werden.

Dies ermöglicht es - unter Beibehaltung der üblichen Regeln in Bezug auf Dateiendungen, selbstausführende bzw. selbstdarstellende widget-artige Skriptinhalte mit dynamischen Inhalten in einem Kleinstgerät einzubauen.

Ein weiteres Anwendungsbeispiel wird im folgenden ein System dargestellt, das die Simulation von AJAX-Skripten auf einem speziell dafür eingestellten, jedoch ansonsten standardmässigen Webserver ermöglicht, wobei es sich zum Beispiel um den verbreiteten Apache Webserver handeln kann, oder aber auch um abgespeckte und offenere Versionen wie z.B. Xampp.

Dieses System besteht aus
- einer speziell ausgewählten Syntax für die SSIs,
- aus einen auf der Serversprache PHP basierenden Interpreter für Variablenzuweisungen, welche an einen GET-String angehängt, d.h. im konkreten Beispiel in der Datei dev.php enthalten sind.
- aus einem Simulatorwebserver, also einem Webserver, der besondere Einstellungen erhält, und der Simulation der für das Kleinstgerät 1 bestimmten Skripte dient.

Das einfache Beispiel im Folgenden ist zur Veranschaulichung gedacht und auf wenige Variablen, wie z.B. die Variable REL für "Relaiszustand", beschränkt.

Das besondere Ziel ist es, dass für das Kleinstgerät 1 entworfene Skripte unverändert, d.h. ohne jegliche Veränderungen dieser Dateien, auf dem Simulatorwebserver ablaufen zu lassen bzw. via Browser testen zu können, ohne die Hardware des Kleinstgerätes 1 zu benötigen. Dabei wird das Variablenbild, d.h. die Menge aller Variablen und zugehörigen Werte, den im Browser laufenden Skripten in gleicher Weise zur Verfügung gestellt, wie es bei vom Kleinstgerät 1 stammenden Skripte der Fall wäre.

Dies ermöglicht, dass für das Kleinstgerät 1 bestimmte Skripte ausführlich vor dem Laden in das Kleinstgerät 1, was je nach Typ ein mehr oder weniger umständlicher Prozess sein kann und vor allen Dingen das Kleinstgerät 1 in Hardware erfordert, zu testen und zu simulieren. Dies nicht nur in Hinblick auf das Erscheinungsbild der entworfenen Skripte im Browser, sondern auch auf die auf konkreten Variablenwerte beruhende Funktionalität und ggf. im Browserskript ablaufende Berechnungen, Umrechnungen und im Browser erscheinende Darstellungen. Die Simulation erfolgt dabei eins-zu-eins und exakt. Einzig eine im Kleinstgerät 1 allenfalls stattfindende interne Funktionalität kann nicht oder nicht so einfach mitsimuliert werden, hierfür müsste ein weiteres serverseitiges und gerätespezifisches Simulationsskript konzipiert werden. Hier allerdings geht es darum, ein vom Kleinstgerät 1 und seiner Funktionalität unabhängiges serverseitiges Skript laufen zu lassen (dev.php), welches Variablenzuweisungen vom Browser/Benutzer auswertet.

Dies wird anhand eines Beispiels dargestellt, bei dem die Kleinstgeräte-Funktionalität im wesentlichen darin besteht, dass ein Relais mit Wert REL=0 oder 1 ein und ausgeschaltet werden kann, und es einen Gerätenamen mit der Variablen DEVNAME und einen PIN mit der gleichlautenden Variablen gibt. Desweiteren wird dieses Beispiel anhand der Webserver-Technologie PHP dargestellt. Grundsätzlich lässt sich das Konzept jedoch auch auf andere Technologien übertragen, wie z.B. CGI, Perl, Python, etc.

(1) Simulationsdatei (en) : Es gibt ein (Haupt-) PHP-File "dev.php ", in dem im Wesentlichen die Gerätevariablen definiert und die Gerätefunktionalität simuliert werden. Darin werden alle Geräte-Variablen als globale Variablen definiert, damit sie somit für alle anderen Skripts im erforderlichen Masse zur Verfügung stehen. Die Namen dieser Variablen werden der Übersichtlichkeit halber überall einheitlich gehalten.

Funktion im Simulator: In diesem einfachen Beispiel werden hier beim ersten Aufruf die Variablen initialisiert: z.B. REL=1; DEVNAME=AJAXupPHP; PIN=1234. Diese Initialisierung der Variablen kann aber auch in einer separaten ini.php-Datei stehen, welche im Kleinstgerät 1 gar keine Funktion hat. Somit müsste vor jedem Simulationsvorgang die Datei ini.php aufgerufen werden.

Dieses Simulationsfile dev.php enthält weiters allfällige Funktionalität des Kleinstgerätes 1, z.B. interne Berechnungen von Variablenwerten oder Programmabläufe. Beispielsweise kann im obigen Beispiel das Relais nach dem Einschalten auf REL=1 nach Ablauf einer vordefinierten Zeit automatisch in den Ruhezustand REL=0 zurückkehren, was mit einer internen Zeitfunktion gekoppelt werden kann.

Funktion im Kleinstgerät 1: Demgegenüber existiert keine Funktion. Die Datei dev.php wird beim Aufruf mit GET ignoriert bzw. eine leere Datei retourniert. Zwar kann ini.php darin stehen, soll/darf aber von den Skripten nicht verwendet werden. Das Kleinstgerät 1 kann ja letztlich nur zwei Funktionen übernehmen, die im Simulator von der PHP-Oberfläche und von dev.php bewerkstelligt, d.h. simuliert, werden: Zum Einen das Auswerten des GET-Query-Strings und Ausführen allfällig enthaltener Variablenzuweisungen, und zum anderen das Parsen von .php-Dateien nach dem Ausdruck <?php echo=REL ?> und dem Ersetzen dieser Zeichenkette mit dem eigentlichen Wert der Variablen REL, also mit 0 oder 1.

Konkrete Ausführung für dev.php, welches eine beliebige Anzahl von Variablenzuweisungen, die mit "&" voneinander getrennt sind, parst bzw. interpretiert und auf dem Simulationswebserver in konkrete einzelne, jedem Variablenwert zugehörigen Einzeldateien hineinschreibt. Diese Einzeldateien haben nur auf dem Simulationsserver eine Funktion, nämlich diejenige, dass der Inhalt an der Stelle eines Server-Side-Includes der Form <!--#include file="REL"--> eingesetzt wird. Somit wird der gleiche Effekt erzielt wie auf dem Kleinstgerät 1, ohne dass die Datei geändert werden muss. Es ist sogar so, dass alle Variableneinzeldateien wie z.B. "REL." durchaus auch auf das Kleinstgerät 1 geladen werden können - beabsichtigt oder unbeabsichtigt - jedoch dort keine Funktion ausüben. Dies ermöglicht das einfache Laden des gesamten Satzes von Files vom Simulationsserver nach erfolgter erfolgreicher Simulation auf das Kleinstgerät 1.

### Beispiel File dev.php:

```
 <?php
 if (!empty($_GET)) {
    foreach($_GET as $gg => $g){
         if ($g!="") {
             $fp = fopen($gg,w);
             ftruncate ($fp,0);
             fwrite($fp, $g) ;
             fclose ($fp) ;
         }
    }
 }
 ?>
```

Der Inhalt der Datei "REL." bei eingeschaltetem Relais (Dateiname ohne Ergänzung, in diesem konkreten Beispiel) lautet: 1

Der gleiche Inhalt kommt zustande, wenn vom Browser eine GET-Anfrage gestartet wird, in welcher der Variablen REL der Wert 1 zugewiesen wird. Obiges dev.php sorgt auf Serverseite dafür, dass die Datei "REL." genau diesen Inhalt erhält. Der entsprechende GET-Request hat z.B. folgendes Aussehen: GET dev.php?REL=1

(2) Variablenzuweisungen: Befehle vom Browser, mit denen Variablenwerte verändert werden sollen, werden vom im Browser ablaufenden Skript im GET-QUERY-String (also nach dem "?") mitgeteilt und sind an das dev.php zu richten, d.h. z.B. ein Schaltung des Relais auf 1 würde wie folgt formuliert: GET dev.php?REL=1

Funktion im Simulator: Die somit aufgerufene php-Datei dev.php wertet den an sie gerichteten query-String "REL=1" aus und setzt die globale Variable REL auf 1. Alle weiteren Skripte, sofern sie aufgerufen werden, haben Zugriff auf diese Variable mit dem neuen Wert 1.

Funktion im Kleinstgerät: Dieses ignoriert die Datei-Anfrage für dev.php und sendet nur eine leere Datei zurück, also nur ein EOF oder eine Datei mit Content-Length: 1, je nach Protokoll. Der GET-Query-String "REL=1" wird vom Kleinstgerät 1 als Variablenzuweisungsbefehl erkannt und die Variable dementsprechend gesetzt.

Die Funktionen im Simulator und im Kleinstgerät 1 sind somit die gleichen. Es ist lediglich das Kleinstgerät 1 entsprechend anzupassen, dass es die Datei-Anfrage für dev.php ignoriert und mit leerem Inhalt (also nur EOF) beantwortet, und im GET-query-String enthaltene Variablenzuweisungen interpretiert und ausführt.

(3) Variableninkludierung, Datei-Ergänzungen: Die interaktive Browserfunktion kommt dadurch zustande, dass vom Browser angefrage Dateien vom Kleinstgerät 1 bzw. vom Simulator dynamisch inkludierte Variablenwerte enthalten.

Die Ursprungsdatei enthält die Zeichenkette <?php echo VAR ?>, welche vom Kleinstgerät 1 und auch vom php-Webserver, auf dem die Simulation ablaufen soll, so interpretiert werden, dass anstelle dieser Zeichenkette der Wert der Variablen in die Datei inkludiert wird, und diese Datei gesendet wird.

Dieses automatische Parsing lässt sich sowohl beim Kleinstgerät 1 als auch beim php-Webserver für Dateien mit konkret vorgegebenen Ergänzungen bzw. Dateiendungen einstellen. Dies kann für .php-Dateien stattfinden, jedoch auch für allfällige sonst verwendete Dateien, bei denen inkludierte Variablenwerte enthalten sind, wie z.B. optional .xml, .json, .shtml. Wichtig ist, dass diese Dateiendungen für die php-Interpretation auf Kleinstgerät 1 und Simulation, d.h. Webserver, gleich eingestellt sind. Ist dies nur für .php der Fall, was häufig die Standardeinstellung von Webservern darstellt, so sind reine Datendateien - sofern sie dynamisch inkludierte Variablen enthalten sollen - ebenfalls mit der Endung .php auszuführen.

(4) Simulator-Kleinstgerät-Developer-Schnittstelle: Zum Zwecke des Beobachtens der Variablenwerte während laufender Simulation der entwickelten Skripte kann eine spezielle Seite dazu verwendet werden, die aktuellen Variablenwerte anzusehen. Dies kann ganz einfach in einer SHTML-Datei mit kurzer eingestellter Refreshzeit sein. Hierbei muss in diesem Fall auch .shtml als PHP-geparste Dateiergänzung eingestellt sein. Es kann sich aber auch um eine .php-Datei handeln, die einfach alle Variablen auflistet und ihre Werte angibt. Darüber hinaus kann dieses Portal auch dazu genutzt werden, während laufender Simulation Variablenwerte zu verändern bzw. einzugeben.
Beispiel Nr. 1: device.php ("developers device portal") mit dem Eintrag: <p>REL=<?php echo REL ?></p> usw.
Beispiel Nr. 2: device.shtml mit Eingabemöglichkeit von Variablenwerten, Ausgabe der aktuellen Variablenwerte (SSIs) .
Beispiel Nr. 3: device.json als File

(5) Zugriff zur Simulation: Das Ganze kann auf einem lokal ablaufenden Webserver mit PHP-Funktionalität, z.B. xampp, oder auch auf einem gemieteten externen Webspace, z.B. basierend auf einem Apache-Web-Server mit PHP, ablaufen und somit anderen Personen zur Einsicht zur Verfügung stehen. Insbesondere das Testen mit verschiedenen Browsern wie Microsoft Internet Explorer (MSIE), Mozilla Firefox (FF), Opera (opera.com), Browzar (browzar.org) hat sich als sehr wichtig erwiesen und erfordert oftmals das "Tweaken" von Skript-Code, bis die Skripte in allen diesen Browsern fehlerfrei laufen. Die Simulationsmöglichkeit bietet hier die Möglichkeit, dies effizient und ggf. auch parallelisiert vorzunehmen.

(6) Schnittstelle zwischen Kleinstgeräte-Entwickler und AJAX-Skript-Webdesigner anhand eines Beispieles und eines einzigen .json Files für ein Kleinstgerät 1, welches einen Namen hat (DEVNAME), eine Personal Identification Number (PIN), und zwei Benutzer mit jeweils einer Adresse (USERx_BDADDR) sowie einem Namen (USERx_NAME):

### Inhalt des Files device.json:

```
 {
    "variables":
    [
         {
         "name": "DEVNAME", ,
         "default":"0"
         "current":'<!--#include file="DEVNAME" -->',
         "description":"Device Name"
         },
         {
         "name":"PIN",
         "default":"10",
         "current":'<!--#include file="PIN" -->',
         "description":"PIN for all users USR1-7 for
        connecting"
         },
         {
             "name" : "USERO_BDADDR",
             "default" : "00USROBDADDR0000",
             "current" : '<!--#include file="USRO_BDADDR"
             -->',
             "description" : "BT Dev Address of this user
             READ ONLY !"
         },
         {
             "name" : "USER0_NAME",
             "default" : "HIMMEL",
             "current" : '<!--#include file="USR0_NAME" --
             >' ,
             "description" : "Device Name of this user,
             READ ONLY !"
         },
         {
             "name" : "USER1_BDADDR",
             "default" : "00USR1BDADDR0000",
             "current" : '<!--#include file="USR1_BDADDR"
             -->',
             "description" : "BT Dev Address of this user,
             READ ONLY !"
         },
         {
             "name" : "USER1_NAME",
             "default" : "n.a.",
             "current" : '<!--#include file="USR1_NAME" --
             >' ,
             "description" : "Device Name of this user,
             READ ONLY !"
         },
    ]
 }
```

Hierbei wird dem Entwickler ein Format vorgegeben, in welchem er seine Kleinstgeräte-Variablen, die er dem Webdesigner übergibt bzw. nennt, samt Defaultwerten zu Simulationszwecken und samt Beschreibung eingeben kann. Der Webdesigner kann diese device.json-Datei sofort im vorhandenen Simulationswebserver einbinden, indem z.B. ein PHP-Skript, z.B. ini.php, basierend auf diesem .json-File eine Initialisierungsprozedur durchführt, welche die Variablenwerte initialisiert. Gleichzeitig enthält obige device.json-Datei alle zugehörigen SSI-Variablen und kann somit das komplette Variablenbild an eine für Entwickler zur Verfügung stehende HTML-Seite bzw. SHTML-Seite oder AJAX-Seite liefern, um dort übersichtlich dargestellt zu werden.

Der Simulationswebserver kann mit besonderen Einstellungen derart eingestellt werden, dass er sich gleich verhält wie das Kleinstgerät 1. Dies unter der Annahme, dass im Falle der Simulation für jede Variable eine zugeordnete Datei vorhanden ist, welche lediglich den aktuellen Variablenwert als Inhalt hat. Insbesondere soll die Webservereinstellung das Server-Parsen von SSIs durchführen, bei all jenen Dateien, die SSIs enthalten, z.B. shtml-Dateien, .json-Dateien, .xml-Dateien, .ssi-Dateien, .inc-Dateien. Weiters ist es vorteilhaft, den Webserver so einzustellen, dass .shtml-Dateien vom Browser als HTML-Dateien und nicht als undefinierte Dateien erkannt werden und als solche dargestellt werden und nicht wie bei einigen Browsern dann automatisch zum Download angeboten werden. Schliesslich ist es vorteilhaft, wenn der Webserver für alle .shtml, .json, .xml, .ssi, .inc-Dateien in den HTTP-Header eine Zeile mit "Expires:" einfügt, gefolgt von einem Datum, welches schon abgelaufen ist. Dadurch wird sichergestellt, dass der Browser diese Dateien nicht cached, d.h. nicht aus einem Zwischenspeicher holt, sondern immer neu anfragt, wenn ein Skripteintrag dies anfordert.

Ein weiteres Anwendungsbeispiel besteht in der Einbindung von Kleinstgeräten 1 als Webwidgets in Onlinewebseiten mittels Zwischenanwendung 4. Unter Webwidget wird hier die Einbindung einer Webseite, z.B. Kleinstgeräte-Oberfläche, in eine andere Webseite verstanden, z.B. Online-Account. Grundsätzlich ist es sehr einfach, in einer HTML-Seite zwei Webseiten mit verschiedenen URLs mit Hilfe der "iframe"-Technik gleichzeitig darzustellen. Hierdurch werden zwei Webseiten praktisch unabhängig voneinander in definierten Frames innerhalb einer Webseite dargestellt. Die hier auftretende Problemstellung besteht darin, dass diese beiden Frames nicht miteinander Daten austauschen können, was aus Sicherheitsgründen so in die Browserfunktionen implementiert wurde. Für das Kommunikationsverfahren stellt dies eine wesentliche Limitierung dar. Für den Anwender ist es vorteilhaft, wenn vom Device-GUI Daten auf die Online-Webseite verschoben werden oder in anderer Form die Daten des Kleinstgerätes 1 im Online-Account verwertbar gemacht werden können, genau so, als ob das Kleinstgerät 1 Teil der Online-Applikation wäre.

Die erwähnte iFrame-Methode ist dafür nicht geeignet. Des weiteren ist es technisch nicht möglich, eine XMLHTTP-Anfrage an eine andere URL zu senden, sondern nur an die gleiche URL, von der auch die aktuell dargestellte Webseite kommt. Dies wird von modernen Browsern ebenfalls aus Sicherheitsgründen unterbunden. Das heisst, es ist nicht möglich, in einer Online-Webapplikation mit der Beispiel-URL http://www.onlineapplication.com/index.html einen XMLHTTP-Anfrage an ein Gerät zu senden, das eine andere URL hat, wie z.B. http://localhost:10000/index.html .

Der erste erfindungsgemässe Lösungsansatz hierfür besteht darin, der Zwischenanwendung 4 die Aufgabe zu geben, dass dem Browser eine einzige URL vorgespiegelt wird, die einzelnen Anfragen jedoch einmal nach www.onlineapplication.com oder nach localhost:10002 geschickt werden, je nach Adressat, den Online-Server für die Webapplikation oder das lokal via Zwischenanwendung 4 angebundene Kleinstgerät 1. Die Zwischenanwendung 4 stellt für den Browser in diesem Lösungsansatz eine einzige URL dar, z.B. http://localhost:10000/. Nun können alle Anfragen ohne weitere Protokollangabe "http://" automatisch an das Kleinstgerät 1 weitergereicht werden. Die Anfrage an http://localhost:10000/index.html wird als "GET /index.html" an das Kleinstgerät 1 weitergereicht. Alle Anfragen mit der Angabe einer Online-URL mit neuer Protokollangabe anstelle des Dateinamens werden dann ins Internet weitergereicht, z.B. http://localhost:10000/http://www.onlineapplication.com/ind ex.html. Die Zwischenanwendung 4 erkennt eine solche Anfrage daran, dass anstelle des ansonsten erwarteten Dateinamens eine Protokollangabe samt ":" folgt und es sich somit nicht um einen Dateinamen handeln kann. Somit erscheinen dem Browser beide URLs, d.h. Kleinstgeräte-URL und Online-Applikations-URL, als ein und dieselbe aktuelle Browser-URL, nämlich in diesem Beispiel http://localhost:10000/.

Ein weitere Möglichkeit der Einbindung von Kleinstgeräten 1 als Webwidgets mittels Zwischenanwendung 4 kann mittels JS-Methode bzw. Javascript-Methode erreicht werden. Alternativ zum oben dargestellten Ansatz gibt es auch ohne Erweiterung der Funktion der Zwischenanwendung 4 die Möglichkeit, von einer Online-URL als aktuelle Browser-URL direkte Zugriffe zum Kleinstgerät 1 zu tätigen, und zwar mit dem normalen HTML-Eintrag einer anzufordernden Javascript-Source.

Dieser lautet zum Beispiel: <script type="text/javascript" src="http://localhost:10000/devicewidgetscriptexample.js">

Hier wenden die Browser keine URL-Überprüfung an und senden diese Anfrage auch an URLs, die nicht mit der aktuellen Browser-URL übereinstimmen. Das gleiche Prinzip wird auch durch Google Analytics angewendet.

Für das erfindungsgemässe Kommunikationsverfahren besteht allerdings noch die Hürde, dass der Dateninhalt einer Datei, welche auf diese Art und Weise angefordert wird, durch den Browser nicht eingesehen werden kann - der Browser kann nicht auf die einzelnen Bytes der Datei zugreifen. Es können nur vorgefertigte Browserfunktionen verwendet werden, wie z.B. Darstellung als Bild oder Ausführung als Javascript-File. Letzteres kann genutzt werden, indem auf dem Gerät ausführbare Javascript-Skripte - quasi als eine Art Webwidget-Code - abgelegt werden, welche dann durch einen einheitlichen Befehl von einem Online-Webapplikations-Webpage durch einfaches Anfordern dieses Javascriptfiles ausgeführt werden können.

Fig.3 zeigt eine schematische Darstellung einer ersten Ausführungsform des erfindungsgemässen Kommunikationsverfahrens. In diesem Beispiel ist die Zwischenanwendung 4 auf der Hardware des Anzeigegerätes 2 implementiert, d.h. beide Komponenten nutzen den gleichen Rechner, so dass die Zwischenanwendung 4 rein softwareseitig realisiert wird. Eine andere Alternative ist die Implementierung der Zwischenanwendung 4 in einem USB-Adapter, das dann beispielsweise im Sinne eines "Software-Kabels" an einen USB-Port des Anzeigegerätes 2 angeschlossen werden kann.

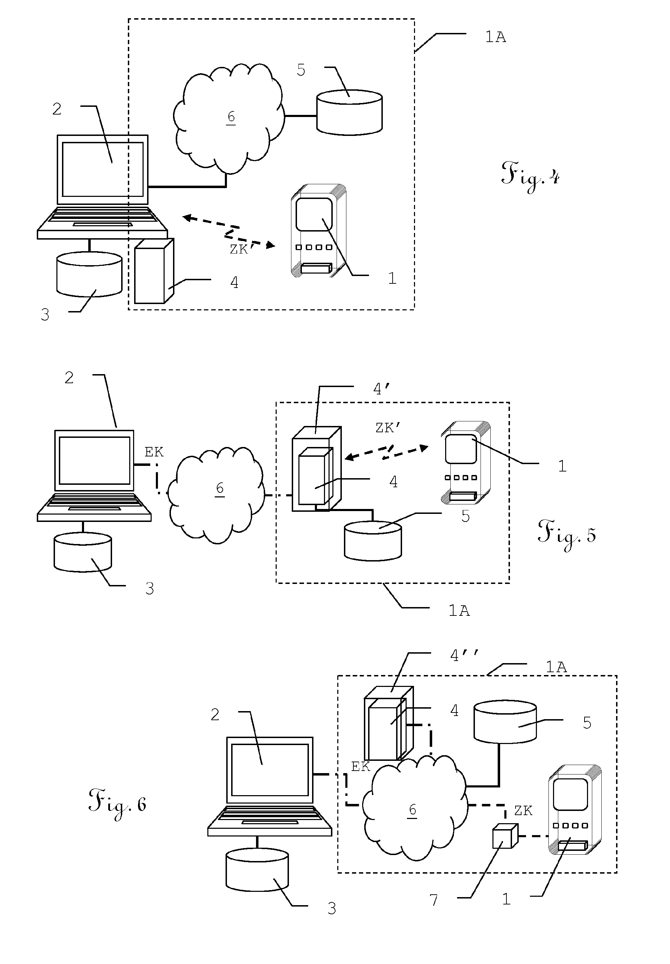

Eine Variante dieser Lösung zeigt Fig.4 für eine zweite Ausführungsform des erfindungsgemässen Kommunikationsverfahrens, bei dem die Zwischenanwendung über das Internet 6 auf den Speicher 5 zugreift, was z.B. die oben beschriebene fortlaufende oder periodisch erfolgende Aktualisierung oder Ergänzung des ursprünglich installierten Dateibestandes erlaubt. Die zweite Kommunikationsverbindung ZK' ist hier als drahtloses Funksystem ausgebildet. Auch bei dieser Ausführungsform erscheint das Gesamtsystem aus Zwischenanwendung 4, Kleinstgerät 1 und Speicher 5 mit dazwischengeschalteter Internetverbindung aus Browsersicht als ein virtuelles Kleinstgerät 1a mit höherer Leistung.

Fig.5 erläutert eine dritte Ausführungsform des erfindungsgemässen Kommunikationsverfahrens, bei der das Anzeigegerät 2 über das Internet 6 auf die Zwischenanwendung 4 zugreift, die somit auf einem vom Anzeigegerät unabhängigen Rechner implementiert ist. Dieser Rechner kann beispielsweise ein Router 4' sein, dessen zweite Kommunikationsverbindung ZK' mit dem Kleinstgerät als drahtlose Verbindung ausgebildet ist. Der Router mit Zwischenanwendung 4 samt Speicher 5 und Kleinstgerät 1 ergeben für den Browser das virtuelle Kleinstgerät 1, dessen Schnittstelle dargestellt wird. Ein mögliches konkretes Ausführungsbeispiel beinhaltet einen Router 4' als Plattform für die Zwischenanwendung 4 mit AMD LX800 oder ARM9-Prozessor und Linux-OS und 150-500 MHz Taktrate, somit immer noch deutlich über den 1-20 MHz Taktrate, die bei kleinen Mikrocontrollern in Kleinstgeräten 1 üblich sind.

Eine vierte Ausführungsform des erfindungsgemässen Kommunikationsverfahrens wird in Fig.6 schematisch dargestellt, bei der die Kommunikation aller Komponenten über das Internet 6 realisiert ist, d.h. erste und zweite Kommunikationsverbindung EK, ZK nutzen zumindest teilweise das Internet 6. Konkret kann beispielsweise das Kleinstgerät 1 mit einer Kabelverbindung, z.B. RS232, an einen Netzzugangspunkt 7 ohne besondere Funktion angeschlossen sein, wobei dieser Netzzugangspunkt 7 lediglich die Anbindung an das Internet und damit die Verbindung mit einem Server 4" ermöglicht, auf dem die Zwischenanwendung 4 realisiert ist. Die browserseitig realisierte Benutzerschnittstelle erscheint auf dem separaten Anzeigegerät 2, welches ebenfalls via Internet 6 mit dem Server 4" der Zwischenanwendung 4 verbunden ist. Es können anstelle des Internets 6 grundsätzlich jedoch auch andere Kommunikationsnetzwerke verwendet werden, z.B. auch nur lokale Teile des Internets bzw. ein Intranet. Das Datentransferaufkommen ist zwischen Server 4" und Anzeigegerät 2 wegen des Cachings und der auf dem Server realisierten Zwischenanwendungs-Funktion höher, zwischen dem Server 4" ' und dem Kleinstgerät 1 kann hingegen die Datenkommunikation auf ein Minimum beschränkt werden. Diese Anordnung ist besonders dort interessant, wo der Netzzugangspunkt 7 keine freien Ressourcen mehr hat, um eine Zwischenanwendung 4 zu realisieren, oder besonders kostengünstig und somit ressourcenarm sein soll. Konkret kann diese Zwischenanwendung 4 auf dem Server 4" beispielsweise in einem PHP-Skript implementiert sein.

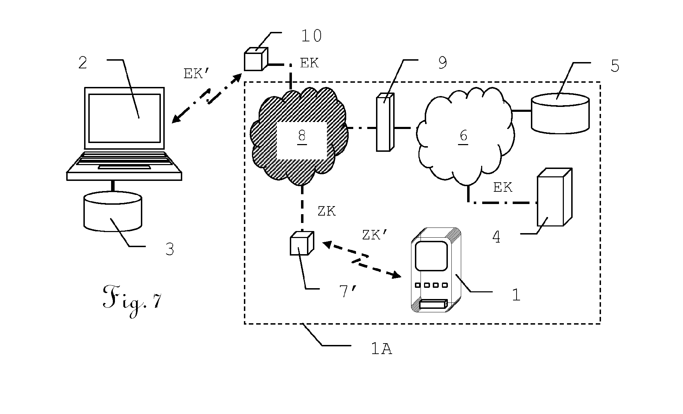

Fig.7 zeigt eine schematische Darstellung einer fünften Ausführungsform des erfindungsgemässen Kommunikationsverfahrens mit einem Intranet 8 als zusätzlichem Kommunikationsnetzwerk. Nunmehr besteht das virtuelle Kleinstgerät 1a analog Fig.6 aus dem Kleinstgerät 1 mit Netzzugangspunkt 7', wobei das Kleinstgerät 1 hier jedoch über eine drahtlose Verbindung, z.B. ZigBee, angebunden ist, sowie den weiteren Komponenten, die über Intranet 8 und Internet 6 miteinander kommunizieren. Das Anzeigegerät 2 als Mobilgerät mit Browser ist hier mittels WLAN als erster Kommunikationsverbindung EK' über das Intranet 8 mit dem Internet 6 verbundenen. In dieser Darstellung wird die Anbindung von Speicher 5 und Zwischenanwendung 4 über eine Firewall 9 ermöglicht. In diesem Ausführungsbeispiel weisen sowohl erste als auch zweite Kommunikationsverbindung EK, EK', ZK, ZK" drahtlose und drahtgebundene Anteile auf, sowie Anteile, die über Kommunikationsnetzwerke geführt werden. In beiden Fällen wird die Leistungsfähigkeit der jeweiligen Verbindung durch das jeweils schwächste Teilstück bestimmt.

Trotz der gewählten systemspezifischen Beispiele ist das Verfahren grundsätzlich auch für andere Formen der Datenhaltung und Kommunikation erfindungsgemäss verwendbar. Insbesondere die Ausgestaltung der Datenformate und deren logische und physische Datenhaltung können vom Fachmann problemlos an verschiedene Systeme angepasst werden.

## Patentansprüche

1. Kommunikationsverfahren zur Datenübertragung für ein elektronisches Kleinstgerät (1),
mit
• einer auf einem Anzeigegerät (2) realisierten Benutzerschnittstelle zur Darstellung von Daten des Kleinstgerätes (1) mittels eines skriptbasierten Browsers, der innerhalb eines Skripts Dateien als Informationseinheiten aufruft, und eines Datenübertragungsprotokolls, wobei Kleinstgerät (1) und Anzeigegerät (2) räumlich unabhängig voneinander positionierbar sind,
• einer Zwischenanwendung (4), die
- über eine erste Kommunikationsverbindung (EK,EK') mit der Anzeigegerät (2) einerseits und
- über eine zweite Kommunikationsverbindung (ZK,ZK'') mit dem Kleinstgerät (1) andererseits verbindbar ist,
wobei
- die Datenübertragungsrate der zweiten Kommunikationsverbindung (ZK,ZK') geringer als die der ersten Kommunikationsverbindung (EK,EK') ist, insbesondere kleiner als 3 Mbps, und
- Rechenleistung und Speicherplatz des Kleinstgerätes (1) geringer als Rechenleistung und Speicherplatz der Zwischenanwendung (4) sind, insbesondere der Speicherplatz kleiner als 100 kB ist,
und wenigstens den Schritten
- Übertragen von dem Kleinstgerät (1) zugeordneten Daten an das Anzeigegerät (2) durch die Zwischenanwendung (4), wobei die Daten vom Kleinstgerät (1) synchron oder vorab asynchron zum Übertragen an die Zwischenanwendung (4) übermittelt werden,
**dadurch gekennzeichnet, dass**
ein Anpassen der zu übertragenden Daten so erfolgt, dass die Zwischenanwendung (4) eine für das Kleinstgerät (1) und das Anzeigegerät (2) spezifische Datei bereitstellt,
wobei diese spezifische Datei durch das Anzeigegerät (2) anhand der Dateibezeichnung dem Kleinstgerät (1) zuordenbar ist, so dass eine Verarbeitung mittels skriptbasierten Browser ermöglicht wird und die Zwischenanwendung (4) für das Anzeigegerät (2) die funktionale Schnittstelle zum Kleinstgerät (1) definiert.

2. Kommunikationsverfahren nach Anspruch 1,
**dadurch gekennzeichnet, dass**
beim Anpassen vom Kleinstgerät (1) zu übertragenden Daten durch die Zwischenanwendung (4) durch weitere Daten ergänzt werden, wobei die Zwischenanwendung (4) die Ergänzungen von einer vom Kleinstgerät (1) unabhängigen Speichereinheit (5) abruft.

3. Kommunikationsverfahren nach Anspruch 1 oder 2,
**dadurch gekennzeichnet, dass**
beim Anpassen die Zwischenanwendung (4) eine Vereinfachung des Datenübertragungsprotokolls für das Kleinstgerät (1) vornimmt, insbesondere durch Reduzierung auf eine Teilmenge des Hypertext-Transfer-Protocols.

4. Kommunikationsverfahren nach einem der vorangehenden Ansprüche,
**dadurch gekennzeichnet, dass**
beim Anpassen die Zwischenanwendung (4) die zu übertragenden Daten zur Erzeugung der spezifischen Datei konvertiert, insbesondere durch Daten-Komprimierung oder Daten-Entkomprimierung.

5. Kommunikationsverfahren nach einem der vorangehenden Ansprüche,
**dadurch gekennzeichnet, dass**
beim Anpassen die Zwischenanwendung (4) hinsichtlich des Kleinstgeräts (1) adaptierte Datenstrukturen erzeugt, insbesondere durch Einrichten einer Webserver-Datenstruktur aus nur einer Default-Datei und einer gepackten Datei, wobei die gepackte Datei Skriptfiles enthält, so dass die Zwischenanwendung (4) in Beantwortung einer Anfrage des Anzeigegerätes (2) an das Kleinstgerät (1) durch Aufruf der Default-Datei ein automatisches Aufrufen und Entpacken der gepackten Datei vornimmt.

6. Kommunikationsverfahren nach einem der vorangehenden Ansprüche,
**dadurch gekennzeichnet, dass**
beim Anpassen die Zwischenanwendung (4) eine Datenvorratsspeicherung für das Kleinstgerät (1) ausführt.

7. Kommunikationsverfahren nach Anspruch 6,
**dadurch gekennzeichnet, dass**
als Dateibezeichnung ein Hash-Wert zum Dateinamen oder einer entsprechende Adressbezeichnung im Internet (6) hinzugefügt oder darin aufgenommen wird, so dass eine definierte Referenzierung mit Integritätsprüfung möglich ist.

8. Kommunikationsverfahren nach Anspruch 7,
**dadurch gekennzeichnet, dass**
der Hash-Wert aus dem Inhalt der Datei inklusive Dateinamen und Dateitypergänzung berechnet und an den Dateinamen angehängt wird.

9. Kommunikationsverfahren nach einem der vorangehenden Ansprüche,
**dadurch gekennzeichnet, dass**
der Speicherplatz des Kleinstgerätes (1) maximal 32 kB und die Datenübertragungsrate der zweiten Kommunikationsverbindung (ZK,ZK') maximal 9600 bps beträgt.

10. Kommunikationsverfahren nach einem der vorangehenden Ansprüche,
**dadurch gekennzeichnet, dass**
Daten von dem Anzeigegerät (2) über die Zwischenanwendung (4) auf das Kleinstgerät (1) übertragen werden.

11. Kommunikationsverfahren nach einem der vorangehenden Ansprüche,
**dadurch gekennzeichnet, dass**
die erste und/oder zweite Kommunikationsverbindung (EK,ZK) über das Internet realisiert wird.

12. Kommunikationsverfahren nach einem der vorangehenden Ansprüche,
**dadurch gekennzeichnet, dass**
die Zwischenanwendung (4) auf dem Anzeigegerät (2) implementiert ist.

13. Kommunikationsverfahren nach einem der vorangehenden Ansprüche,
**dadurch gekennzeichnet, dass**
die Zwischenanwendung (4) in einem USB-Adapter implementiert ist.

14. Kommunikationsverfahren nach einem der vorangehenden Ansprüche,
**dadurch gekennzeichnet, dass**
durch das Anzeigegerät (2) eine Einbindung von Funktionalitäten des Kleinstgerätes (1) in Anwendungen im Internet (6) erfolgt.

15. Computerprogrammprodukt mit Programmcode, der auf einem maschinenlesbaren Träger gespeichert oder durch eine elektromagnetische Welle verkörpert ist, zur Durchführung eines der Verfahren nach einem der Ansprüche 1 bis 14, insbesondere wenn das Programm in einem Computer ausgeführt wird.

16. Datenstrukturprodukt zur Durchführung des Verfahrens nach Anspruch 5 aus nur einer Default-Datei und einer gepackten Datei, wobei die gepackte Datei Skriptfiles enthält, so dass die Zwischenanwendung (4) in Beantwortung einer Anfrage des Anzeigegerätes (2) an das Kleinstgerät (1) ein durch Aufruf der Default-Datei ein automatisches Aufrufen und Entpacken der gepackten Datei vornimmt.
